# EUROPEAN PATENT SPECIFICATION

(11) **EP 3 252 381 B1**
(45) Date of publication and mention of the grant of the patent: **04.08.2021**
(21) Application number: 16203762.6
(22) Date of filing: 13.12.2016
(51) Int. Cl.: F24C 7/04, F24C 15/22

(54) **COOKING OVEN AND CONTROLLING METHOD THEREOF**
BACKOFEN UND STEUERUNGSVERFAHREN DAFÜR
FOUR DE CUISSON ET PROCÉDÉ DE COMMANDE CORRESPONDANT

(30) Priority: 31.05.2016 US 201662343197 P; 03.06.2016 US 201662345079 P; 12.07.2016 KR 20160087941
(43) Date of publication of application: 06.12.2017
(73) Proprietor: Samsung Electronics Co., Ltd., Suwon-si, Gyeonggi-do (KR)
(72) Inventor: Ha, Joo-Young, Suwon-si, Gyeonggi-do (KR); Yoon, Boo Keun, Yongin-si, Gyeonggi-do (KR); Park, Yong Jong, Seongnam-si, Gyeonggi-do (KR); Park, Jong Sung, Seoul (KR); Lee, Ji-Young, Yongin-si, Gyeonggi-do (KR); Han, Jeong Su, Suwon-si, Gyeonggi-do (KR)
(74) Representative: Gulde & Partner

(56) References cited:
- EP-A1- 2 618 634
- EP-A2- 2 983 452

## Description

### BACKGROUND

### 1. Field

Embodiments of the present disclosure relate to a cooling apparatus.

### 2. Description of Related Art.

A cooking apparatus is typically configured to cook a single type food at one time.

When a plurality of foods requiring a different cooking temperature and cooking time is cooked at one time using a conventional cooking apparatus, there may occur some problems, i.e., any food is less cooked and other food is over cooked.

Therefore, in order to properly cook a variety of foods which require a different cooking temperature, a different cooking time and a different recipe using a conventional cooking apparatus, a long cooking time may be needed since each single food is cooked at a time. Accordingly, there has been an attempt of developing a cooking apparatus configured to cook a variety of foods requiring a different cooking temperature and time, and a different recipe at one time so as to reduce a cooking time and energy.

EP 2 983 452 A2 discloses a cooking appliance with a cooking space, a steam generator device and a microwave device for heating food being associated with the cooking space. The steam generator device is designed and designed to supply steam to the cooking space, and the microwave device comprises a microwave generator, microwave radiation at an entry point into the cooking chamber. As a result, a first cooking zone is provided in the cooking space in contact with the entry point for the microwave radiation. Furthermore, a limiting device is provided in the cooking space, which is suitable and designed to provide a second cooking zone in the cooking space, which is delimited by the limiting device opposite the entry point of the microwave radiation such that the entry of microwave radiation into said cooking zone is limited.

EP 2 618 634 A1 describes a microwave heating apparatus and a method of heating a load using microwaves. The microwave heating apparatus comprises a cavity arranged to receive a load, a plurality of feeding ports for feeding microwaves from a plurality of microwave generators to the cavity, and a control unit. The control unit is configured to obtain a desired temperature pattern within the cavity based on information about a plurality of regions of the load, determine a heating pattern comprising zones of different intensities corresponding to the desired temperature pattern, and control at least some of the plurality of microwave generators for providing the heating pattern within the cavity.

### SUMMARY

Therefore, it is an aspect of the present disclosure to provide a cooking apparatus capable of cooking a plurality of cooking materials using a heat transfer regulator having a plurality of regions in which a reflectance against heat generated by a heater is variable, and a controlling method thereof.

Additional aspects of the present disclosure will be set forth in part in the description which follows and, in part, will be obvious from the description, or may be learned by practice of the present disclosure.

In accordance with one aspect of the present disclosure, a cooking apparatus comprising: at least one heater; and a heat transfer regulator provided to face the at least one heater and provided with a plurality of regions each having a different (respective) reflectance against heat generated by the at least one heater.

The heat transfer regulator is a reflector provided in a boundary between the plurality of regions of the heat transfer regulator to reflect an incident electromagnetic wave to prevent an interference of electromagnetic waves, which are generated by the heater and pass through the plurality of regions.

The heat transfer regulator is a reflector protruded with a predetermined length in a boundary between the plurality of regions in a surface that is opposite to a surface facing the at least one heater.

The heat transfer regulator comprises the plurality of regions placed to be spaced apart from each other, and a reflector protruded with a predetermined length toward a surface, which is opposite to a surface facing the at least one heater, in the separated space to prevent a heat conduction between the plurality of regions.

The heat transfer regulator comprises a coating layer provided in each of the plurality of regions and configured to have a different reflectance, wherein the coating layer is provided on at least one surface between a surface facing the at least one heater and a surface that is opposite to the surface facing the at least one heater.

The plurality of regions of the heat transfer regulator comprises a glass each having a different (respective) reflectance.

The plurality of regions of the heat transfer regulator comprises a lens having a convex shape, in which a surface opposite to a surface facing the at least one heater has a convex shape.

The cooking apparatus further comprises: a sensor configured to detect a cooking state of cooking material, wherein the sensor comprises at least one of an infrared sensor detecting a temperature of the cooking material, a gas sensor detecting a gas generated in the cooking material and a camera acquiring an image of the cooking material.

The cooking apparatus further comprises: a controller configured to control an operation of the at least one heater according to a change in the cooking state of the plurality of cooking materials cooked by heat applied via the heat transfer regulator.

A bottom surface of the cooking apparatus comprises a plurality of regions in which a cooking material is placed, wherein the plurality of regions of the bottom surface has a different heat absorption rate.

The plurality of regions of the bottom surface corresponds to the plurality of regions of the heat transfer regulator.

The plurality of regions of the bottom surface is spaced apart from each other to prevent a heat conduction therebetween.

The bottom surface comprises a material having a lower heat conductivity than a predetermined reference value, in the separated space to prevent the heat conduction between the plurality of regions of the bottom surface.

The cooking apparatus further comprises: a lower reflection device provided in a lower side of the bottom surface of the cooking apparatus and provided with a plurality of regions corresponding the plurality of regions, wherein the plurality of regions of the lower reflection device has a different heat reflectance.

The heat transfer regulator comprises at least one first region blocking electromagnetic waves generated by the at least one heater and at least one second region passing through the electromagnetic waves generated by the at least one heater.

The at least second region comprises a plurality of holes so that the electromagnetic waves pass therethrough.

The at least one first region is provided to adjust an area thereof such that when an area of the first region is increased, an area of the second region adjacent to the increased area of the first region is reduced, and when an area of the first region is reduced, an area of the second region adjacent to the reduced area of the first region is increased.

In accordance with one aspect of the present disclosure, a control method of a cooking apparatus comprising: identifying cooking materials by a sensor of a cooking apparatus; determining an expected operation time and output of a plurality of heaters for cooking the identified cooking materials; determining any one expected operation time among the expected operation times as an operation time of the plurality of heaters; and controlling the determined output of the plurality of heaters based on the determined operation time of the plurality of heaters.

The determination of any one expected operation time among the expected operation times as an operation time of the plurality of heaters comprises determining the maximum expected operation time among the determined expected operation time, as an operation time of the plurality of heaters, and the control of the determined output of the plurality of heaters based on the determined operation time of the plurality of heaters comprises, when the heater among the plurality of heaters has a shorter operation time than the determined maximum operation time, controlling an output of the heater to be lower than the determined output.

The determination of any one expected operation time among the expected operation times as an operation time of the plurality of heaters comprises determining the minimum expected operation time among the determined expected operation time, as an operation time of the plurality of heaters, and the control of the determined output of the plurality of heaters based on the determined operation time of the plurality of heaters comprises, when the heater among the plurality of heaters has a longer operation time than the determined minimum operation time, controlling an output of the heater to be higher than the determined output.

### BRIEF DESCRIPTION OF THE DRAWINGS

These and/or other aspects of the disclosure will become apparent and more readily appreciated from the following description of embodiments, taken in conjunction with the accompanying drawings of which:
FIGS. 1 to 3 are views illustrating an example of a cooking apparatus in accordance with the disclosed embodiment.
FIG. 4 is a view illustrating an example of a cooking apparatus having a reflection device in accordance with one embodiment of the present disclosure.
FIGS. 5A-5B are views illustrating an example of a reflection device in accordance with one embodiment of the present disclosure.
FIG. 6 is a view illustrating a configuration of the cooking apparatus in accordance with one embodiment of the present disclosure.
FIGS. 7 and 8 are views illustrating another example of a cooking apparatus having a reflection device in accordance with one embodiment of the present disclosure.
FIGS. 9 and 10A-10D are views illustrating a variety of examples of the reflection device in accordance with one embodiment of the present disclosure.
FIG. 11 is a view illustrating an example of a reflection device and a cooking apparatus having a plurality of heaters in accordance with one embodiment.
FIG. 12 is a control diagram of the cooking apparatus according to one embodiment.
FIGS. 13 to 15 are views illustrating another example of the reflection device and the cooking apparatus having the plurality of heaters in accordance with one embodiment.
FIGS. 16 and 17 are views illustrating an example of a bottom surface of the cooking apparatus in accordance with the disclosed embodiment.
FIG. 18 is a view illustrating an example of a lower reflection device provided on a lower side of the bottom surface of the cooking apparatus in accordance with the disclosed embodiment.
FIGS. 19, 20 and 21A-21D are views illustrating a cooking ware, not being part of the invention.
FIGS. 22 and 23 are flowcharts illustrating a control method of the cooking apparatus in accordance with one embodiment.

### DESCRIPTION OF EMBODIMENTS

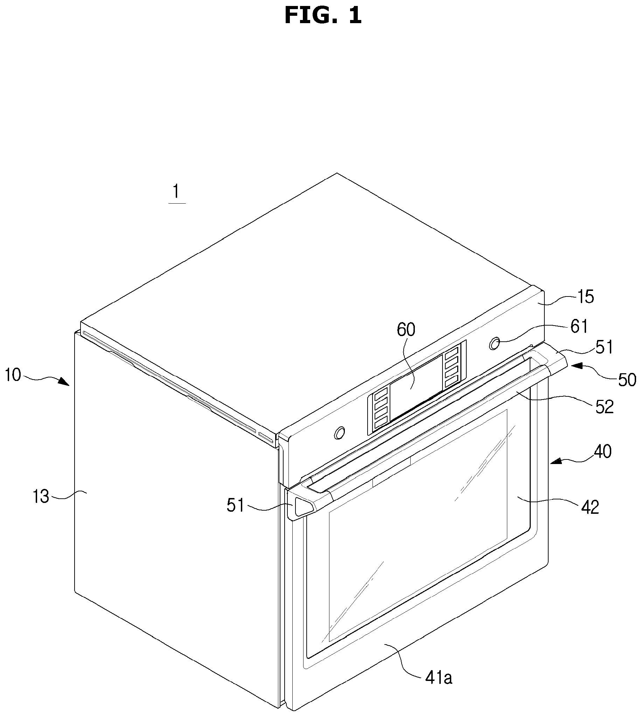

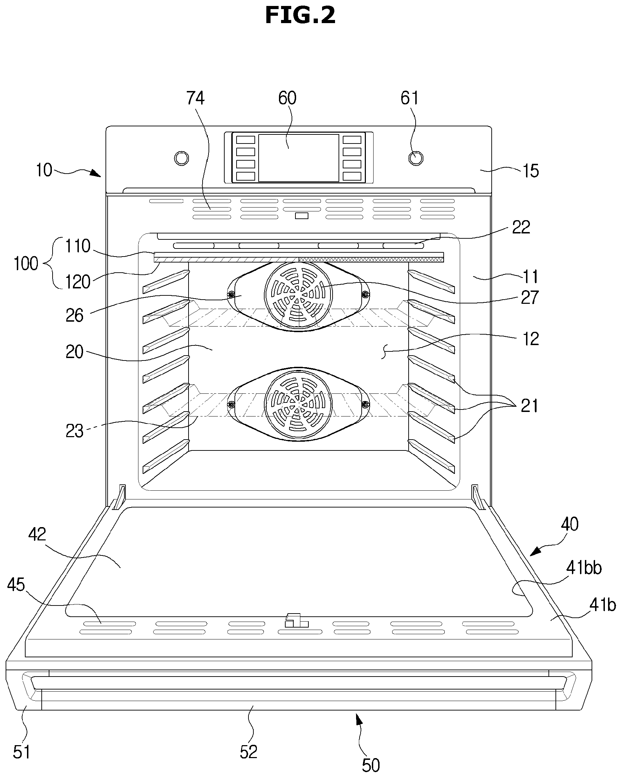

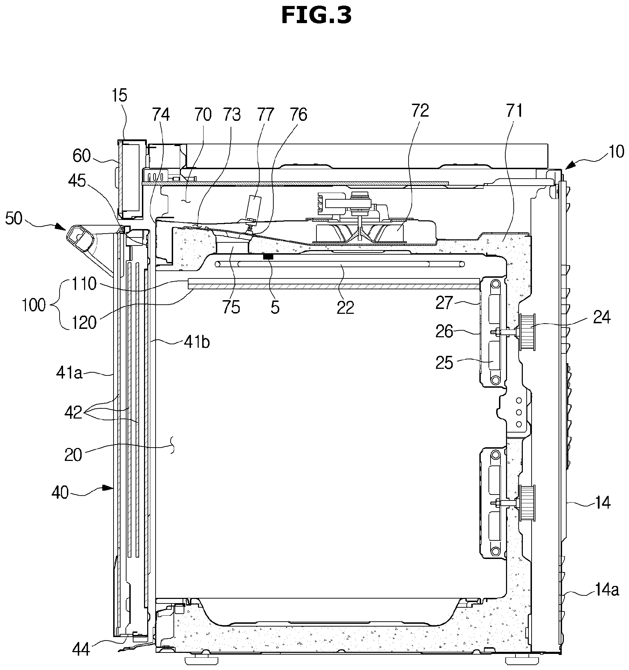

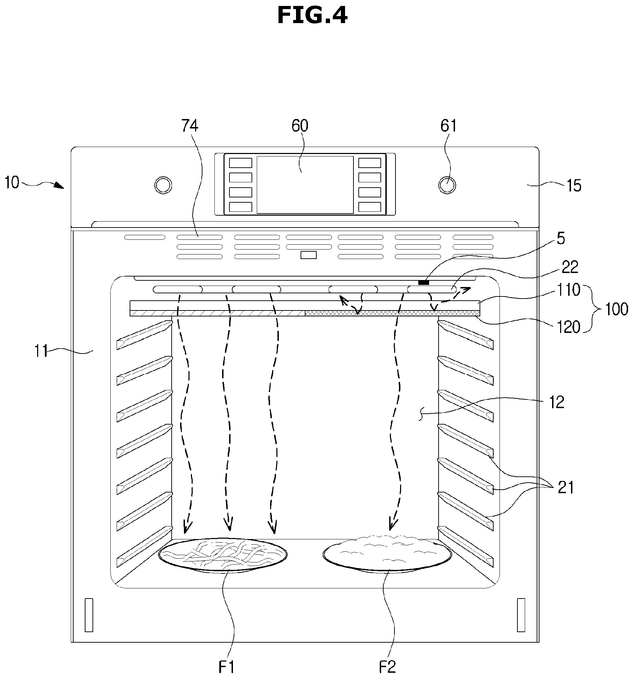

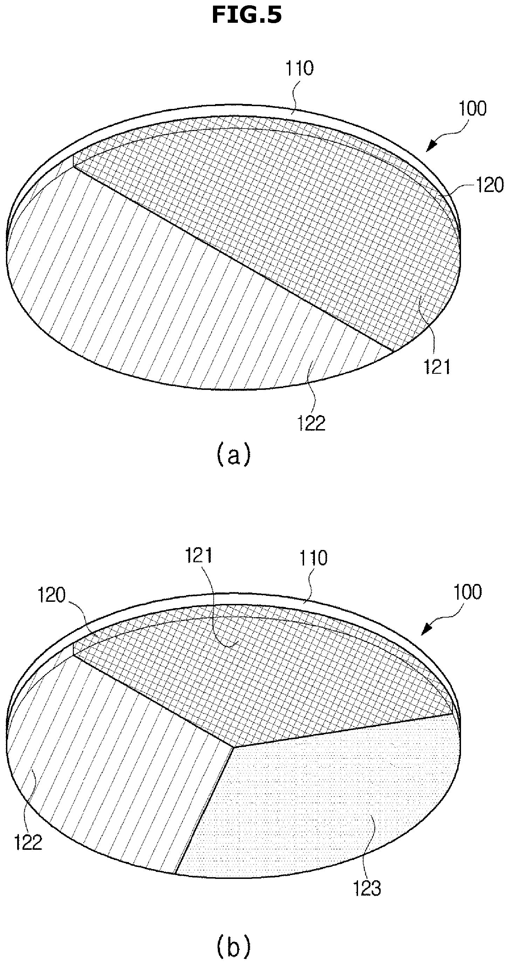

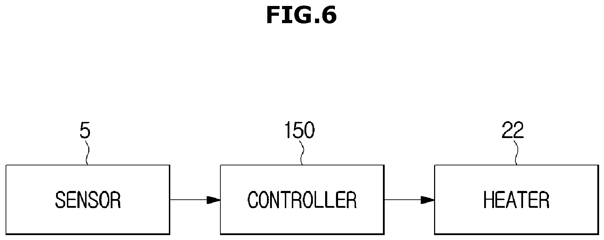

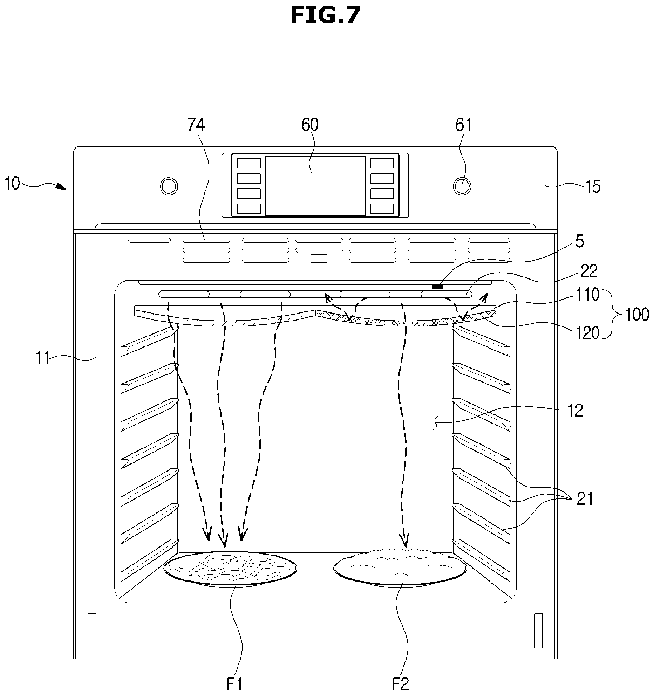

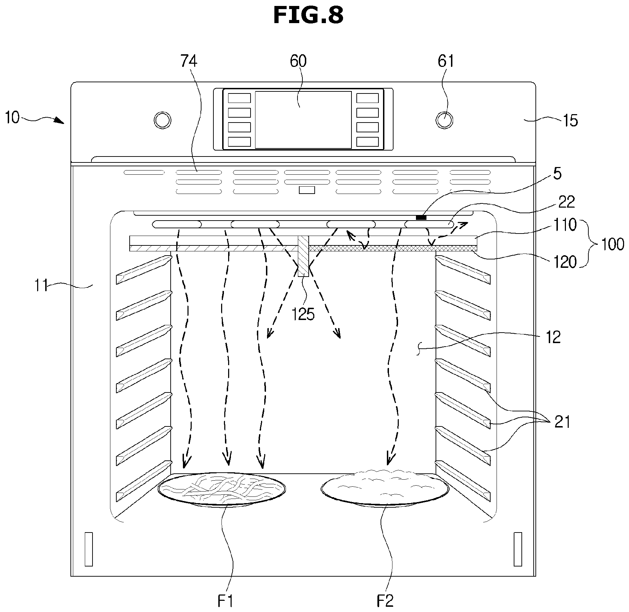

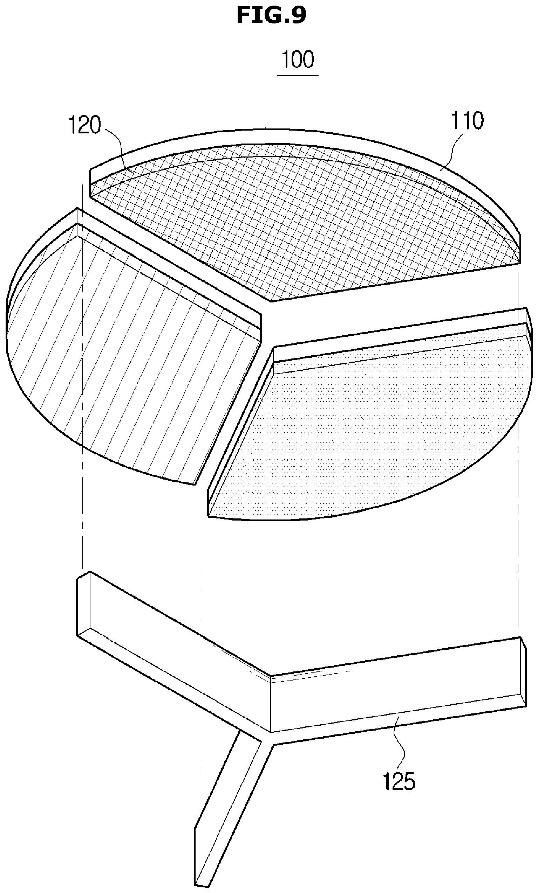

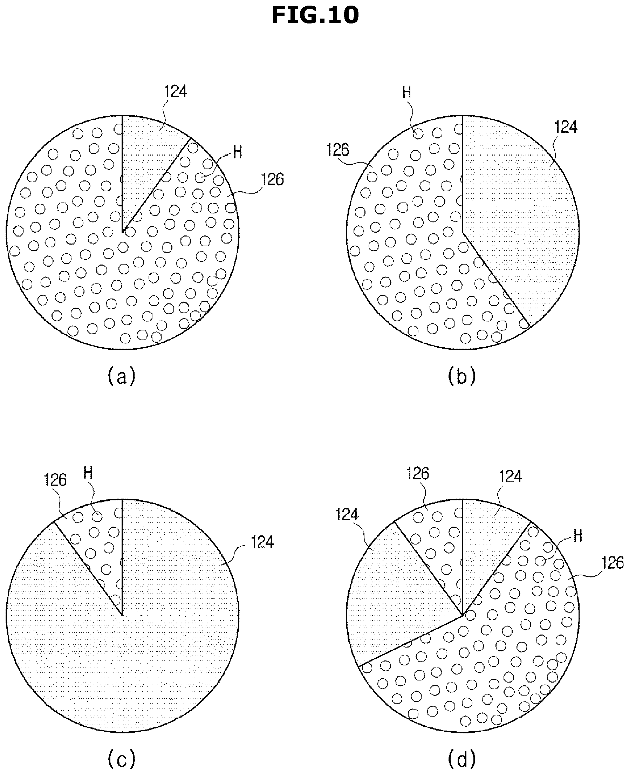

The present disclosure will be described more fully hereinafter with reference to the accompanying drawings. FIGS. 1 to 3 are views illustrating the cooking apparatus of the invention, FIG. 4 is a view illustrating an example of a cooking apparatus having a reflection device in accordance with one embodiment of the present invention, and FIG. 5 is a view illustrating an example of a reflection device in accordance with one embodiment of the present disclosure. FIG. 6 is a view illustrating a configuration of the cooking apparatus in accordance with one embodiment of the present invention, FIGS. 7 and 8 are views illustrating another example of a cooking apparatus having a reflection device in accordance with one embodiment of the present disclosure, and FIGS. 9 and 10 are views illustrating a variety of examples of the reflection device in accordance with one embodiment of the present invention.

According to the invention, a cooking apparatus 1 is configured to perform cooking a food by heating a cooking material, and the cooking apparatus 1 is an oven.

As illustrated in FIGS. 1 to 3, according to the disclosed embodiment, the cooking apparatus 1 may include a case 10 and a cooking compartment 20 provided inside of the case 10. The case 10 may include a front panel 11 forming a front surface of the case 10, a side panel 13 forming a side surface of the case 10 and a rear panel 14 forming a rear surface of the case 10.

The cooking compartment 20 having a box shape may be provided inside of the case 10 and a front surface thereof may be opened or closed by a door. The front panel 11 may include an opening 12 provided to correspond to the cooking compartment 20 having the front surface open. The cooking compartment 20 may include a plurality of supporters 21 protruding on a left and right side wall of the cooking compartment 20. A rack 23 in which a cooking material is placed may be mounted to the plurality of the supporters 21.

A heater 22 heating a cooking material may be provided in the cooking compartment 20. According to the disclosed embodiment, the heater 22 may include a heater configured to heat a cooking material by generating electromagnetic waves such as far-infrared rays. For example, according to the disclosed embodiment, the heater 22 may include an electric heater having an exothermic body. Hereinafter a heater configured to heat a cooking material by generating electromagnetic waves will be described as an example. A heat transfer regulator configured to control transferring heat generated by the heater to a cooking material is provided in a lower side of the heater. The heat transfer regulator controls transferring heat generated by the heater to a cooking material by adjusting reflection, penetration and conduction of the heat. According to the invention, the heat transfer regulator is a reflection device 100 having a plurality of regions each having a different reflectance against electromagnetic waves generated by the heater 22 may be provided in the lower side of the heater 22. A detail description of the reflection device 100 will be described later. In addition, the cooking apparatus 1 may include a sensor 5 provided inside of the cooking compartment and configured to acquire information related to a cooking material. A detail description of the sensor 5 will be described later.

In a rear side of the cooking compartment 20, a convection fan 25 circulating air in the cooking compartment 20 to allow a cooking material to be evenly cooked and a convection motor 24 driving the convection fan 25 may be provided. A fan cover 26 covering the convection fan 25 may be provided in a front side of the convection fan 25, and a through hole 27 may be formed on the fan cover 26 to allow air to be moved therethrough.

The door may be hinge-coupled to a lower side of the case 10 so that the door is rotatable about the case 10. As another example, the door may be hinge-coupled to the left side or the right side of the case 10.

The door may include a transparent material, e.g. a glass 42 to allow a user to confirm a cooking process of a cooking material placed inside of the cooking compartment 20 from the outside, wherein a plurality of glasses may be included inside of the door. The door may include a front door frame 41a and a rear door frame 41b provided along an edge of the glass member. The door may include an air inlet 44 disposed on a lower end portion thereof to allow air to be introduced from the outside to the inside of the door. An external air introduced via the lower end portion of the door may exchange heat with heated air that is delivered from the cooking compartment 20 while moving to an upper side in the inside of the door, and then discharged to an air outlet 45 provided in the rear door frame 41b. Using the above mentioned configuration, the heat inside of the door may be cooled through the air circulation according to the present disclosure.

The door may include a handle 50 provided in an upper end portion of the front surface of the door so that a user holds the door to open and close the door. When the door is hinge-coupled to the left side or the right side of the case 10, the handle 50 may be provided in the right side or the left side of the door to correspond to the location of the door. The handle 50 may be protruded toward the front side with a predetermined length from the front surface of the door 40. That is, the handle 50 may include a pair of handle supporters 51 extending from the front surface of the door 40 to the front side and a handle extension 52 connecting the pair of handle supporters 51.

The cooking apparatus 1 may include a display 60 disposed on an upper portion of the front surface of the front panel 11 to display a variety of information related to an operation of the cooking apparatus 1 and to allow a user to input an operation command. The display 60 may be provided in an electronic component room cover 15. The display 60 may employ Light Emitting Diode (LED), Organic Light Emitting Diode (OLED) or Liquid Crystal Display (LCD). In addition, the display 60 may employ Touch Screen Panel (TSP) configured to receive an input of a control command from a user and to display operation information corresponding to the control command received. The touch screen panel may include a display to display the operation information and a control command inputtable by a user, a touch panel to detect coordinates with which a user's body part is in contact and a touch screen controller to determine the control command input by the user based on the contact coordinates detected by the touch panel.

The touch screen controller may recognize the control command input by the user by comparing a user's touch coordinate detected by the touch panel with a coordinate of the control command displayed through the display.

The cooking apparatus 1 may include an operator 61 provided in the electronic component room cover 15 to allow an additional command for an operation of the cooking apparatus 1 to be input.

The cooking apparatus 1 may include an electronic components room 70 in which an electronic component configured to control an operation of a variety of components including a display module 60 is accommodated. The electronic components room 70 may be provided in an upper side of the cooking compartment 20. An insulation member 71 may be provided between the electronic components room 70 and the cooking compartment 20 to insulate between the electronic components room 70 and the cooking compartment 20 so that hot air in the cooking compartment 20 is prevented from being delivered to the electronic components room 70.

As well as the insulation member 71 is provided between the electronic components room 70 and the cooking compartment 20, the insulation member 71 may be configured to cover an entire of the outside of the cooking compartment 20 so that hot air in the cooking compartment 20 is prevented from being delivered to the outside of the cooking apparatus 1.

The cooking apparatus 1 may include a cooling structure to cool the electronic components room 70 by circulating air in the surrounding of the cooking compartment 20. The cooling structure of the cooking apparatus 1 may include a cooling fan unit 72 moving air, and a cooling flow path 73 discharging air introduced by the cooling fan unit 72 to the front side.

The external air may be introduced to the electronic components room 70 via a through hole 14a formed in the rear panel 14, and the air introduced to the electronic components room 70 may be moved to the inside of the electronic components room 70 to cool the electronic component and then discharged to the front side of the cooking apparatus 1 along the cooling flow path 73 through a discharge port 74.

A part of air in the cooking compartment 20 may be introduced to a side of the cooling flow path 73 through a discharge flow path 75 and then discharged to the front side of the cooking apparatus 1. In addition, a bypass hole 76 introducing a part of air that moves to the discharge port 74 to the discharge flow path 75 may be additionally provided. The bypass hole 76 may be opened or closed by a switching device 77, and an amount of air of the cooking compartment 20 that is discharged to the discharge flow path 75 may be adjusted depending on opening or closing of the bypass hole 76 .

According to the disclosed embodiment, the cooking apparatus 1 may include a reflection device 100 having a plurality of regions each having a different reflectance so that cooking materials which are needed to be cooked at a different cooking temperature and for a different cooking time, or with a cooking recipe are cooked at one time, as illustrated in FIG. 4.

That is, as illustrated in FIG. 4, when the cooking apparatus 1 uses a single heater 22, it may be difficult for the cooking apparatus 1 to provide a cooking temperature and time of a first cooking material (F1) and a second cooking material (F2) requiring a different cooking temperature and time. Therefore, it may be difficult for the cooking apparatus 1 to cook a plurality of cooking materials each having a different cooking temperature and time to be cooked at one time.

In order to cook a plurality of cooking materials each having a different cooking temperature and time at one time, the cooking apparatus 1 may be required to cook each cooking material at a proper cooking temperature and for a proper cooking time. According to the invention, the cooking apparatus 1 includes a reflection device 100 having a plurality of regions each having a different reflectance to cook cooking materials at a proper cooking temperature and for a proper cooking time, as illustrated in FIG. 4.

According to the invention, the reflection device 100 is provided in a lower side of the heater 22 so that electromagnetic waves generated by the heater 22 are incident to the reflection device 100. The reflection device 100 is implemented by a shape and an area configured to cover an entire shape and area of the heater 22 and then provided in the lower side of the heater 22. Hereinafter the reflection device 100 having a circular shape will be described as an example. The reflection device 100 may be fixedly installed on a left and right wall or an upper surface of the inside of the cooking compartment 20. Alternatively, the reflection device 100 may be installed to be rotatable or to allow a translational movement, but the installation of the reflection device 100 is not limited thereto. The reflection device 100 may be installed in various methods.

The reflection device 100 of the cooking apparatus 1 shown in FIG. 4 may be implemented by a coated glass. That is, the reflection device 100 may include a glass 110 and a coating layer 120 formed in a plurality of regions of the reflection device 100 and having a variety of reflectance against the electromagnetic waves.

FIG. 5 is a perspective view of the reflection device 100 schematically illustrating the coating layer 120 provided on a lower surface of the reflection device 100. FIG. 5 illustrates the reflection device 100 having a circular shape, but the shape of the reflection device 100 is not limited thereto. Therefore, the reflection device 100 may be implemented by a shape and an area configured to cover an entire shape and area of the heater 22, as mentioned above. In addition, FIGS. 5A and 5B illustrate that the reflection device 100 has two regions 121 and 122 each having a different reflectance and three regions 121, 122 and 123 each having a different reflectance, but the number of the region is not limited thereto. Therefore, the number of the region may be four or more.

The reflection device 100 may be provided such that a coating layer 120 having a different reflectance is formed in each of a plurality of regions in a piece of glass 110, or the coating layer 120 having a different reflectance is formed in a plurality of glasses 110 corresponding to each of a plurality of regions and then the plurality of glasses 110 is assembled.

Alternatively, the reflection device 100 may be provided such that the coating layer 120 having a different reflectance is formed in the glass 110 having the same reflectance and the same thickness, as mentioned above, so that the plurality of regions has a different reflectance against the electromagnetic waves generated by the heater 22. In addition, the reflection device 100 may include a plurality of regions each having a different reflectance such that the coating layer 120 each having a different reflectance is formed in a plurality of glasses 110 in which at least one of the reflectance and the thickness thereof is different from each other. That is, according to the disclosed embodiment, the reflection device 100 may be implemented by adjusting the thickness or the reflectance of the glass 110 and the reflectance of the coating layer 120 so that the plurality of regions of the reflection device 100 has a different reflectance.

The glass 110 may be implemented by a color glass in which pigments are mixed and thus the reflectance of the glass 110 may be adjusted to be various.

The coating layer 120 may be formed on the glass 110 with a thickness of approximately 2-5nm using Chemical Vapor Deposition (CVD) method or Physical Vapor Deposition (PVD) method, and then formed on the glass 110 with a thickness of approximately 10-50um using dipping method or spray coating method.

The coating layer 120 may be formed of a material such as an oxide, e. g, SnO2, Ag, STS or Ti to have a certain reflectance against the infrared in the electromagnetic waves. In addition, the coating layer 120 may be formed of a silver nitrate to have a certain reflectance against ultraviolet and visible light as well as the infrared. The coating layer 120 may be formed on at least one of a lower surface or an upper surface of the reflection device 100.

As mentioned above, the reflectance of the coating layer 120 may be determined by a coating material or a thickness of the coating layer 120. That is, the reflectance of the plurality of regions of the reflection device 100 may be determined by the thickness or the reflectance of the glass 110 and the material or the thickness of the coating layer 120.

Data may be stored in advance, wherein the data may include a cooking time or a cooking temperature that is required to properly cook a variety of cooking materials cooked by using the cooking apparatus 1 according to the disclosed embodiment. The reflectance of the plurality of regions of the reflection device 100 may be determined based on the data so that a different cooking material is cooked at a proper cooking temperature, and in order to achieve the determined reflectance, the reflection device 100 may be implemented by adjusting the thickness or the reflectance of the glass 110 and the material or the thickness of the coating layer 120.

Referring to FIG. 4, according to the disclosed embodiment, despite of using the cooking apparatus 1 having a single heater 22, the cooking apparatus 1 in which the above mentioned reflection device 100 is installed may cook two cooking materials, which are different from each other, at one time.

FIG. 4 illustrates an example of cooking the first cooking material (F1) and the second cooking material (F2) which requires a different cooking temperature from each other. The reflection device 100 shown in FIG. 4 may be implemented to allow a reflectance of a first region 122 to be higher than a reflectance of a second region in the plurality of regions. Therefore, an intensity of the electromagnetic waves passing through the first region 122 may be higher than an intensity of the electromagnetic waves passing through the second region and thus a cooking material, to which the electromagnetic waves passing through the first region 122 is incident, is cooked at a higher cooking temperature than that of a cooking material to which the electromagnetic waves passing through the second region is incident. In a state in which a cooking temperature of the first cooking material (F1) in the plurality of the cooking materials, is higher than a cooking temperature of the second cooking material (F2), when the first cooking material (F1) is placed on a bottom or a region of a cooking ware corresponding to the first region 122 and the second cooking material (F2) is placed on a bottom or a region of a cooking ware corresponding to the second region, the first cooking material (F1) and the second cooking material (F2) may be cooked at a different temperature, that is, the first cooking material (F1) may be cooked at a higher cooking temperature than a cooking temperature of the second cooking material (F2).

Referring to FIG. 6, the cooking apparatus 1 may include a sensor 5 configured to acquire information related to a cooking material, a heater 22 configured to generate heat, and a controller 150 configured to control driving of the heater 22 based on the information acquired by the sensor 5.

According to the disclosed embodiment, the cooking apparatus 1 may include the sensor 5 configured to identify a cooking material and to detect a cooking state of the cooking material. The sensor 5 may be provided inside of the cooking compartment 20, and the sensor 5 may include an infrared sensor detecting a temperature of the cooking material, a camera acquiring an image of the cooking material and a gas sensor detecting a gas generated in the cooking material.

The controller 150 of the cooking apparatus 1 may identify the cooking material based on the information of the cooking material detected by the sensor 5 and determine a cooking temperature and time required for cooking the identified cooking material. The controller 150 may determine the cooking temperature and time required for cooking the identified cooking material by matching cooking data including a predetermined cooking temperature and time according to a cooking material, with the identified cooking material. The controller 150 may pre-store cooking data including a cooking temperature and time which are appropriate to cook a variety of cooking materials. In addition, the cooking apparatus 1 may store the above mentioned data in a memory by including an additional memory. A memory 115 may include a volatile memory, e.g. S-RAM and D-RAM and a nonvolatile memory e.g. a flash memory, a Read Only Memory, an Erasable Programmable Read Only Memory (EPROM), and an Electrically Erasable Programmable Read Only Memory (EEPROM).

Particularly, the nonvolatile memory may semi-permanently store a control program and control data to control an operation of the cooking apparatus 1. The volatile memory may call the control program and control data from the nonvolatile memory and memory the control program and control data or the volatile memory may memory a user command received via the display or the operator or a variety of control signal output from the controller 150.

The controller 150 may determine an operation time and an output of the heater 22 based on the reflectance of each region of the reflection device 100 and the cooking temperature and time of the identified cooking material, and drive the heater 22 based on the determined operation time and output.

For example, the controller 150 may determine a cooking time and drive the heater 22 for the determined time so that cooking of the plurality of cooking materials is completed at the same time. The controller 150 may determine a cooking time that is the longest in a cooking time of the plurality cooking material, as an operation time of the heater 22. As for the cooking material requiring a shorter cooking time than the determined operation time of the heater 22, since a cooking time thereof is increased, the corresponding cooking material may be required to be cooked at a lower cooking temperature than a predetermined cooking temperature. As mentioned above, the controller 150 may adjust a cooking temperature of the plurality of the cooking material according to the determined operation time of the heater 22, and determine an output of the heater 22 by considering the reflectance of the plurality of regions of the reflection device 100 so that the cooking material is cooked at the adjusted cooking temperature. The controller 150 may control the operation of the heater 22 based on the determined operation time and output of the heater 22.

During cooking the cooking material, when a cooking state of the cooking material is detected by the sensor 5, the controller 150 may appropriately adjust an operation of the heater 22 for the cooking state based on the change in the cooking state of the cooking material. For example, when it is determined that the cooking material is quickly cooked, based on an image of the cooking material acquired by the camera, the controller 150 may reduce the output of the heater 22 or the operation time of the heater 22.

FIGS. 7 and 8 illustrate another example of the reflection device 100 in accordance with the disclosed embodiment.

Referring to FIG. 7, the glass 110 forming the plurality of regions of the reflection device 100 may be formed in a convex shape that is recessed toward a lower side. In the convex surface of the reflection device 100, the above mentioned coating layer 120 may be coated in the plurality of regions with a different reflectance. The reflection device 100 may be formed such that convex lens having a shape corresponding to the plurality of regions of the reflection device 100 are assembled to each other.

When a lower portion of the reflection device 100 has a convex shape, as illustrated in FIG. 7, the electromagnetic waves passing through each region may be focused on a cooking material placed on a bottom of the cooking compartment corresponding to the corresponding region. When the electromagnetic waves passing through each region move toward electromagnetic waves passing through another adjacent region, the interference between electromagnetic waves passing through different regions may occur. When the interference between electromagnetic waves passing through different regions occurs, heat that is greater or less than heat generated by the electromagnetic waves passing through each region may be transmitted to the cooking material and thus it may be difficult to properly cook the plurality of the cooking material. According to the disclosed embodiment, since a lower surface of each region of the plurality of regions of the reflection device 100 has a convex shape, as illustrated in FIG. 7, the above mentioned difficulties may be relieved.

The convex portion of the plurality of regions of the reflection device 100 may have a predetermined curvature so that the electromagnetic waves, which is generated by the heater 22 and then incident to the reflection device 100, are moved in a space corresponding to the corresponding region as illustrated in FIG. 7, while preventing from being moved toward the electromagnetic waves passing through another regions. In addition, the curvature of the convex portion of the reflection device 100 may be determined in consideration of the size of the inside of the cooking compartment 20 so that the electromagnetic waves passing through the reflection device 100 are not focused on a certain region of the cooking material.

FIG. 8 illustrates another example of the reflection device to prevent the interference between electromagnetic waves passing through the plurality of regions of the reflection device 100.

Referring to FIG. 8, a lower surface of the reflection device 100 may be provided in a flat shape in contrast to the reflection device 100 shown in FIG. 7. The reflection device 100 shown in FIG. 8 may include a reflector 125 provided in a boundary between the plurality of regions to prevent the interference between the electromagnetic waves passing through the plurality of regions. As illustrated in FIG. 8, among the electromagnetic waves passing through the plurality of regions, electromagnetic waves moving toward electromagnetic waves passing through another adjacent region may be reflected by the reflector 125 so that the interference with the electromagnetic waves passing through adjacent region does not occur.

The reflector 125 provided on the boundary of the plurality of regions may be implemented by a material determined through experiments so that the reflector 125 has a reflectance that is appropriate for the reflection of the electromagnetic wave. In addition, the reflector 125 may be protruded from the lower surface of the reflection device 100 with a predetermined length to prevent the interference of the electromagnetic wave passing through the each region of the reflection device 100.

FIG. 9 is an exploded-perspective view of the reflection device 100 of FIG. 8. As illustrated in FIG. 9, the reflection device 100 may include the plurality of glasses 110 corresponding to the plurality of regions and the reflector 125 having a predetermined thickness and having a shape corresponding to the boundary between the plurality of glasses 110. As mentioned above, the coating layer 120 having a different reflectance may be provided on the lower surface of the plurality of glasses 110. In addition, the thickness of the reflector 125 may be thicker than the glass 110 and the reflector 125 may be protruded to the lower surface of the reflection device 100, as illustrated in FIG. 7.

Furthermore, the reflector 125 may also perform the function of preventing thermal conductivity between the plurality of regions. The reflector 125 may be provided on the boundary between the glasses 110 forming the plurality of regions to prevent a connection between the glasses 110 so that the thermal conductivity between the plurality of regions is prevented. Therefore, the reflector 125 may be selected by considering the thermal conductivity as well as the reflectance.

FIGS. 10A-10D are views of another example of the reflection device 100. The above mentioned reflection device 100 may adjust the intensity of the electromagnetic wave passing through the reflection device 100 by including the glass 110 and the coating layer 120, but alternatively, the reflection device 100 shown in FIGS. 10A-10D may include a first region 124 shielding the electromagnetic wave incident to the reflection device 100, and a second region 126 in which a large number of hole (H) is provided to allow the electromagnetic wave to pass through. The size of the first region 124 and the second region 126 of the reflection device 100 may be adjustable, as illustrated in FIGS. 10A-10D. That is, as illustrated in FIGS. 10A to 10C, when the area of the first region 124 is increased, the area of the second region 126 may be reduced as much as the increased area of the first region 124, and in contrast, when the area of the second region 126 is increased, the area of the first region 124 may be reduced as much as the increased area of the second region 126. In addition, as illustrated in FIG. 10D, the first region 124 and the second region 126 may include at least two regions, respectively.

As for the reflection device 100 show in FIGS. 10A-10D, the second region 126 may be provided to cover the shape or the area of the heater 22, and the first region 124 may be configured to be spread or closed like as a fan, on a lower surface or an upper surface of the second region 126 so that the first region 124 is configured to adjust the area of the second region 126. The above mentioned structure is an example, and thus the reflection device 100 may be implemented using a variety of structures configured to adjust the area of the first region 124 and the second region 126.

The first region 124 and the second region 126 of the reflector device 100 shown in FIGS. 10A-10D may be implemented by galvanized iron, iron, aluminum or copper, and the second region 126 may be formed such that a number of holes are formed in the above-mentioned materials. In addition, as for the reflection device 100, the reflectance, absorption, or radiation rate of the heat generated by the heater 22 may be adjusted by a coating process on the above-mentioned materials.

The reflection device 100 formed of glass, shown in FIGS. 4, 7 and 8, and the reflection device 100 shown in FIGS. 10A-10D may be used alone, or the reflection device 100 according to any one example of FIGS. 4, 7 and 8, and the reflection device 100 shown in FIGS. 10A-10D may be used together with each other so that the plurality of cooking materials is cooked at a proper cooking temperature at one time.

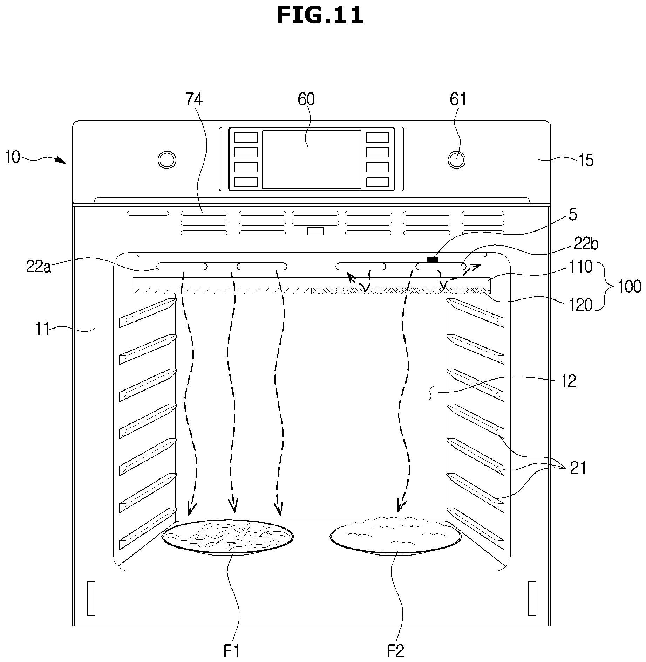

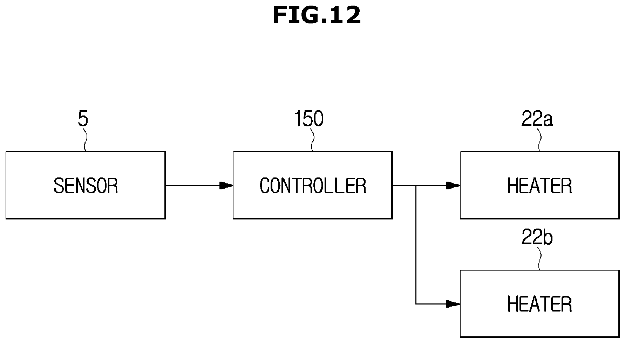

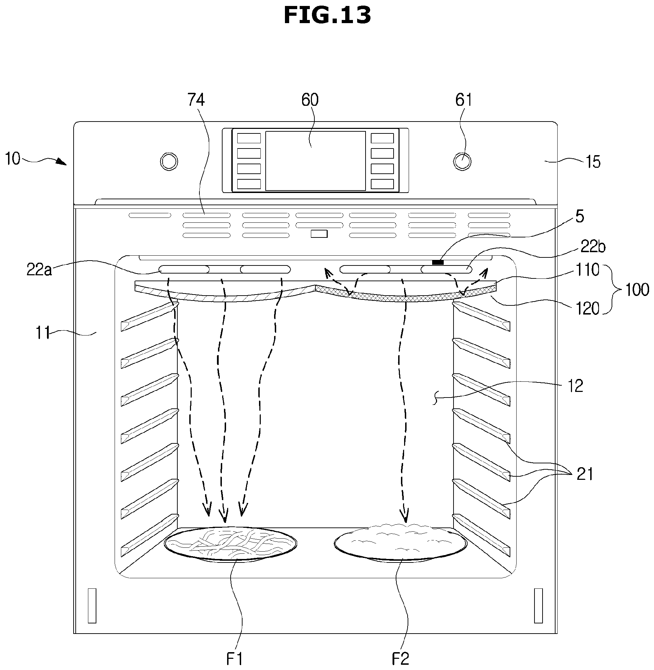

Meanwhile, the plurality of cooking materials is cooked by a single heater 22 as illustrated in the above mentioned cooking apparatus 1 or by a plurality of heaters 22a and 22b of cooking apparatus 1 according to one embodiment described later. FIG. 11 is a view illustrating an example of a reflection device 100 and a cooking apparatus 1 having a plurality of heaters 22a and 22b in accordance with one embodiment, FIG. 12 is a control diagram of the cooking apparatus 1 according to one embodiment. FIGS. 13 to 15 are views illustrating another example of the reflection device 100 and the cooking apparatus 1 having the plurality of heaters 22a and 22b in accordance with one embodiment.

In comparison with the cooking apparatus 1 having a single heater, the cooking apparatus 1 having a plurality of heaters may cook the plurality of cooking materials at one time by adjusting a temperature of each heater for a proper cooking temperature of the plurality of cooking materials. Firstly, an embodiment shown in FIG. 11 will be described.

The cooking apparatus 1 shown in FIG. 11 may have the same structure of the cooking apparatus 1 shown in FIG. 4 except that the cooking apparatus 1 shown in FIG. 11 has the plurality of heaters. The number of the plurality of regions of the reflection device 100 each having a different reflectance may correspond to the number of the heater 22. That is, when two heaters are provided, two regions of the reflection device 100 may be provided. A case in which the number of the region of the reflection device 100 is the same as the number of the heater is an example, and thus the number of the region of the reflection device 100 is larger than the number of the heater. A description of the reflection device 100 is the same as the description of FIG. 4 and thus it will be omitted.

When the plurality of heaters 22a and 22b are used, the heater may be of the same type or different types. For example, a heater configured to generate electromagnetic waves including wavebands, e.g. infrared, ultraviolet, and visible light, and a heater configured to generate micro waves may be used, but is not limited thereto. A heater in a various types may be used.

As for the cooking apparatus 1 shown in FIG. 11, an output of the plurality of heaters 22a and 22b may be differently adjusted and the reflectance of the plurality of regions of the reflection device 100 may be different from each other. Therefore, the cooking apparatus 1 shown in FIG. 11 may precisely adjust a cooking temperature by adjusting an output of the plurality of heaters 22a and 22b for the plurality of cooking materials based on the reflectance of the region of the reflection device 100 corresponding to the plurality of heaters 22a and 22b.

The first region 122 corresponding to the first heater 22a among the plurality of regions of the reflection device 100 may include a plurality of regions. Also, the second region corresponding to the second heater 22b among the plurality of regions of the reflection device 100 may include a plurality of regions. That is, the first region 122 may include the plurality of regions each having a different reflectance, and the second region may include the plurality of regions each having a different reflectance. In this case, the cooking apparatus 1 having the plurality of heaters may cook the larger number of cooking material than the number of cooking material cooked by the cooking apparatus 1 having a single heater, at one time.

Referring to FIG. 12, the cooking apparatus 1 may include a sensor 5 acquiring information related to a cooking material, a plurality of heaters 22a and 22b generating heat, and a controller 150 driving the plurality of heaters 22a and 22b based on the information acquired by the sensor 5.

A description of the sensor 5 is the same as the sensor of FIG. 6, and thus it will be omitted. The controller 150 of the cooking apparatus 1 may identify a cooking material based on the information acquired by the sensor 5, and determine a cooking temperature and time required for the identified cooking material. The controller 150 may determine the cooking temperature and time required for cooking the identified cooking material by matching cooking data including a predetermined cooking temperature and time according to a cooking material, with the identified cooking material. The controller 150 may pre-store cooking data including a cooking temperature and time which are appropriate to cook a variety of cooking materials. In addition, the cooking apparatus 1 may store the above mentioned data in a memory by including an additional memory.

The controller 150 may determine an expected operation time and output of the plurality of heaters 22a and 22b based on the cooking temperature and time of the identified cooking materials, and drive the heaters based on the determined expected operation time and output.

For example, the controller 150 may determine the cooking temperature and time of the cooking materials and drive the plurality of heaters 22a and 22b for the determined cooking time so that cooking of the cooking materials is completed at the same time. That is, when a first cooking time is required to cook the first cooking material (F1), the controller 150 may determine an expected cooking time of the first heater 22a as the first cooking time, and when a second cooking time is required to cook the second cooking material (F2), the controller 150 may determine an expected cooking time of the second heater 22b as the second cooking time. When the first cooking time is required to cook the first cooking material (F1), the controller 150 may determine an output (a first output) of the first heater 22a based on the first cooking time, and when the second cooking time is required to cook the second cooking material (F2), the controller 150 may determine an output (a second output) of the second heater 22b based on the second cooking time.

The controller 150 may determine the longest expected operation time between the expected operation time of the plurality of heaters 22a and 22b as an expected operation time of the plurality of heaters 22a and 22b. For example, when the expected operation time of the first heater 22a is longer than that of the second heater 22b, the controller 150 may determine the expected operation time of the first heater 22a as an expected operation time of the first heater 22a and the second heater 22b. As for the second heater 22b requiring the shorter expected operation time than the determined operation time, since an operation time thereof is increased, it may be appropriate that the second cooking material (F2) cooked by the second heater 22b is cooked at a lower cooking temperature than a predetermined second cooking temperature. Therefore, the controller 150 may control an operation of the second heater 22b so that the output of the second heater 22b is reduced than the second output. In addition, the controller 150 may adjust an output of the second heater 22b by considering the reflectance of the region of the reflection device 100 corresponding to the second heater 22b.

The controller 150 may determine the shortest expected operation time between the expected operation time of the plurality of heaters 22a and 22b as an expected operation time of the plurality of heaters 22a and 22b. For example, when the expected operation time of the second heater 22b is shorter than that of the first heater 22a, the controller 150 may determine the expected operation time of the second heater 22b as an expected operation time of the first heater 22a and the second heater 22b. As for the first heater 22a requiring the longer expected operation time than the determined operation time, since an operation time thereof is reduced, it may be appropriate that the first cooking material (F1) cooked by the first heater 22a is cooked at a higher cooking temperature than a predetermined first cooking temperature. Therefore, the controller 150 may control an operation of the first heater 22a so that the output of the first heater 22a is increased than the first output. In addition, the controller 150 may adjust an output of the first heater 22a by considering the reflectance of the region of the reflection device 100 corresponding to the first heater 22a.

The controller 150 may determine an output of the plurality of heaters 22a and 22b by considering the determined operation time of the heater and the reflectance of the plurality of regions of the reflection device 100, and control the operation of the plurality of heaters 22a and 22b based on the determined output and operation time of the heater.

During cooking the cooking material, when a cooking state of the cooking material is detected by the sensor 5, the controller 150 may appropriately adjust the operation of the heater for the cooking state according to a change in the cooking state of the cooking material. For example, when it is determined that the cooking material is quickly cooked, based on an image of the cooking material displayed on an image acquired by the camera, the controller 150 may reduce the output or the operation time of the heater.

FIGS. 13 to 15 are views illustrating another example of the reflection device 100 in accordance with the disclosed embodiment.

The cooking apparatus 1 according to the embodiment shown in FIG. 13 may be the same as the cooking apparatus 1 according to the embodiment shown in FIG. 7, except that the cooking apparatus 1 of FIG 13 has a plurality of heaters, and thus a description of the reflection device 100 of FIG. 13 will be replaced by the description of the reflection device 100 of FIG. 7.

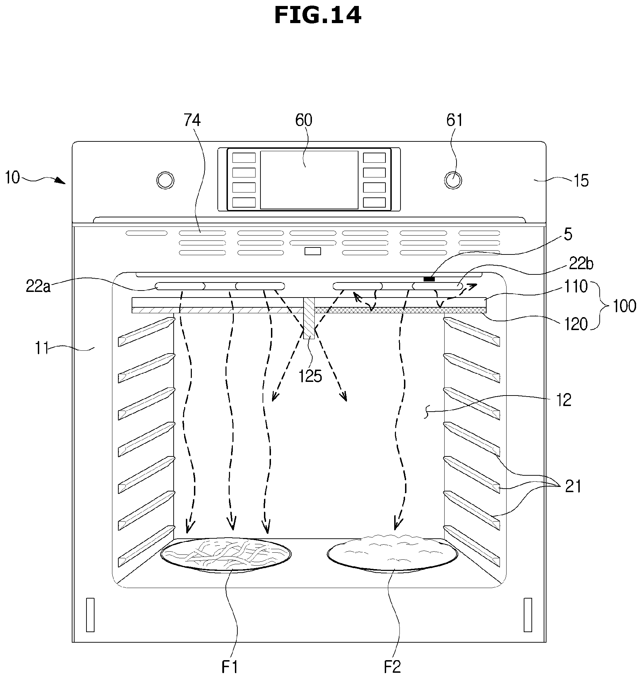

Also, the cooking apparatus 1 according to the embodiment shown in FIG. 14 may be the same as the cooking apparatus 1 according to the embodiment shown in FIG. 8, except that the cooking apparatus 1 of FIG 14 has a plurality of heaters, and thus a description of the reflection device 100 of FIG. 14 will be replaced by the description of the reflection device 100 of FIG. 8.

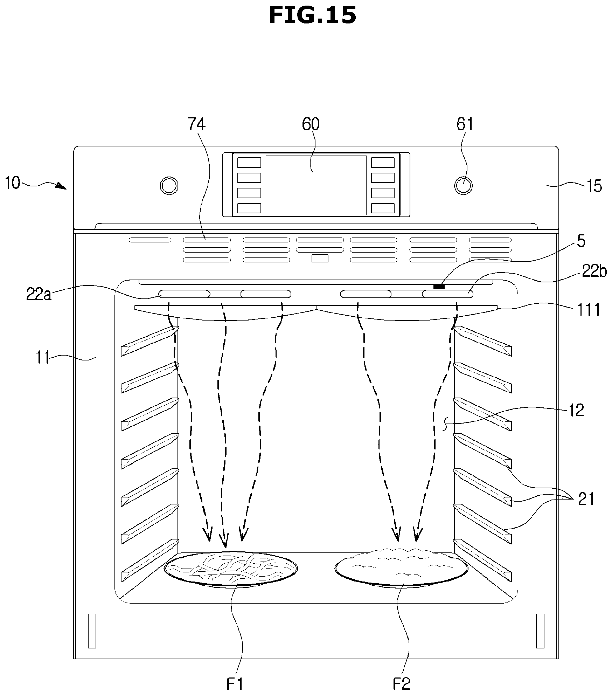

Referring to FIG. 15, the reflection device 100 may include an optical lens 111 in which a lower surface is a convex shape, wherein the number of the optical lens 111 corresponds to the number of the heater. Although, the embodiment shown in FIG. 15 is similar with the embodiment shown in FIG. 13, the reflection device 100 of FIG. 15 excludes the coating layer 120. The cooking apparatus 1 shown in FIG. 15 may include a plurality of heaters 22a and 22b so that a cooking temperature of the plurality of cooking materials is achieved by controlling the plurality of heaters 22a and 22b. Therefore, the reflection device 100 may exclude the plurality of regions each having a different reflectance by including the coating layer 120, but include a plurality of optical lens 111 to focus electromagnetic waves generated by the plurality of heaters 22a and 22b to the cooking material. The reflection device 100 may be installed such that the plurality of optical lens 111 separated from each other is provided on a lower side of each of the plurality of heaters 22a and 22b, respectively or the reflection device 100 may be installed as a single reflection device 100 in which the plurality of optical lens is assembled with each other is provided on a lower side of the heater.

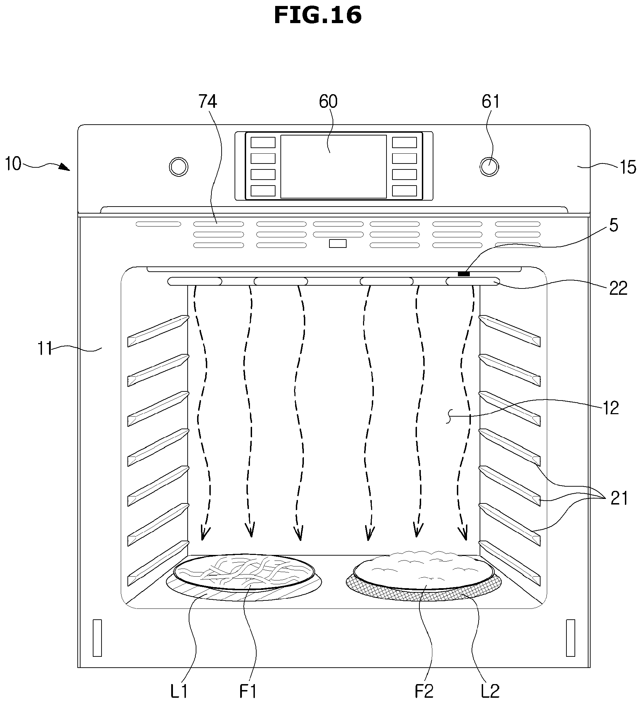

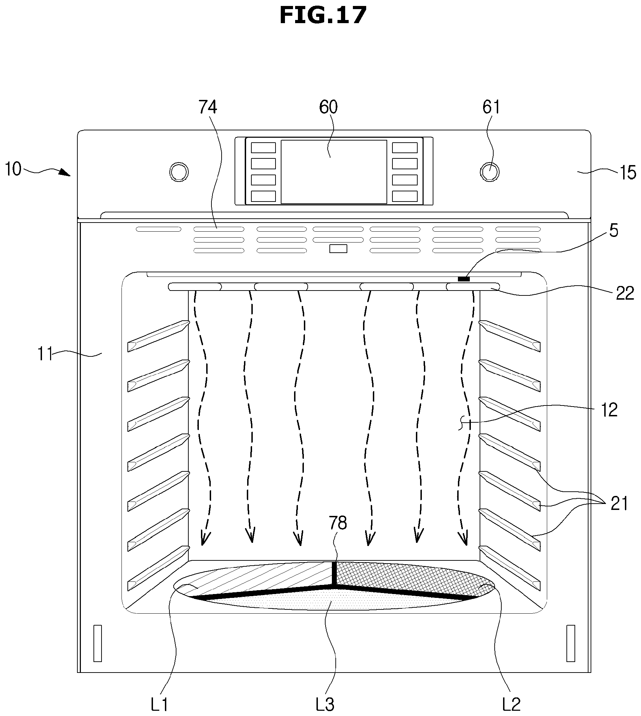

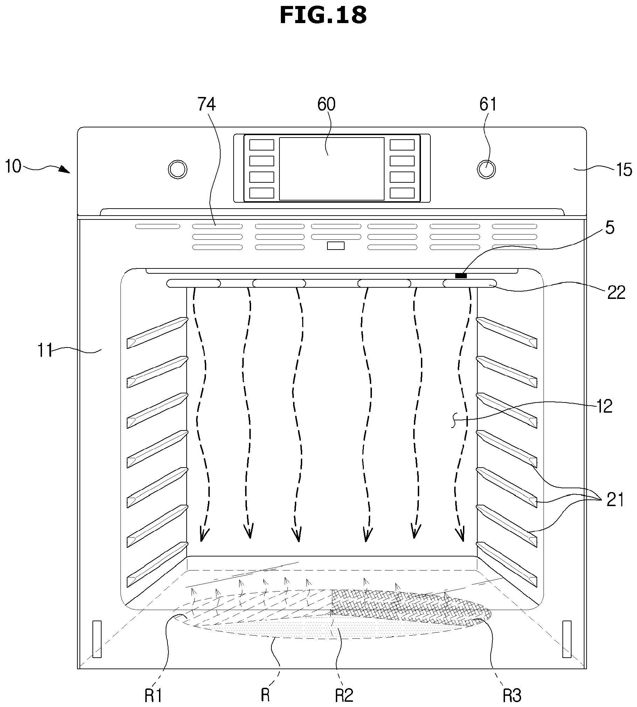

The cooking apparatus 1 according to the disclosed embodiment may include a plurality of regions each having a different heat absorption rate on a bottom surface of the cooking compartment in which a cooking material is placed. FIGS. 16 and 17 are views illustrating an example of a bottom surface of the cooking apparatus 1 in accordance with the disclosed embodiment, and FIG. 18 is a view illustrating an example of a lower reflection device (R) provided on a lower side of the bottom surface of the cooking apparatus 1 in accordance with the disclosed embodiment.

As illustrated in FIG. 16, in the bottom surface of the cooking apparatus 1, a plurality of regions may be provided to allow a plurality of cooking materials requiring a different cooking temperature to be placed thereon. The plurality of regions provided on the bottom surface may be provided to have a different heat absorption rate from each other. For example, in the plurality of regions, a first region (L1) may be provided to have a higher heat absorption rate than that of a second region (L2). The plurality of regions may be implemented by respective materials having different respective specific heat or respective phase change materials. For example, each of the plurality of regions may be implemented by any one material selected from substances such as tetradecane, octadecane or nonadecane. The selected material may have different densities in the respective areas so that the heat absorption rate of the plurality of regions is different from each other. The heat absorption rate may vary by changing the ratio of the above mentioned selected material included in plurality of regions. Alternatively, it may be achieved that the heat absorption rate in each region differs from each other through a combination of the materials. The material forming the plurality of regions of the bottom surface of the cooking apparatus 1 is not limited thereto, and thus the plurality of regions of the bottom surface of the cooking apparatus 1 may be implemented by a variety of materials.

The number of the plurality of regions of the bottom surface may correspond to the number of the plurality of regions of the reflection device 100, and when the heater 22 of the cooking apparatus 1 is provided in plural, the number of the plurality of regions of the bottom surface may correspond to the number of the heater 22. Embodiments relating to the plurality of regions of the bottom surface shown in FIG. 16 may be combined with the above mentioned various embodiments of the cooking apparatus 1. That is, embodiments relating to the plurality of regions of the bottom surface shown in FIG. 16 may be included in the cooking apparatus 1 including a single heater 22 and the reflection device 100 according to the embodiment and the cooking apparatus 1 including a plurality of heaters 22a and 22b and the reflection device 100 according to the embodiment.

A region having a high heat absorption rate among the plurality of regions of the bottom surface may correspond to a region of the reflection device 100 having a low reflectance, or correspond to the heater, which is controlled to have a high output, among the plurality of heaters 22a and 22b. A region having a low heat absorption rate among the plurality of regions of the bottom surface may correspond to a region of the reflection device 100 having a high reflectance, or correspond to the heater, which is controlled to have a low output, among the plurality of heaters 22a and 22b.

As illustrated in FIGS. 16 and 17, the plurality of regions (L1, L2 and L3) of the bottom surface may be apart from each other with a predetermined interval to prevent thermal conductivity among the plurality of regions. Alternatively, as illustrated in FIG. 17, the plurality of regions of the bottom surface may include a material 78 in a space between the regions to prevent the thermal conductivity among the plurality of regions, wherein the material 78 has a lower thermal conductivity than a reference value and includes materials such as teflon, ceramic, aerogel.

FIG. 18 is a view illustrating a lower reflection device (R) provided in a lower side of the bottom surface of the cooking compartment of the cooking apparatus 1. The lower reflection device (R) may reflect a heat, which is absorbed in the bottom surface and then radiated to a lower side of the bottom surface, to the bottom surface again, so that the thermal efficiency is improved.

For example, a first region (R1) of the lower reflectance device (R) having a high heat reflectance may be provided on a lower side of a region, having a high heat absorption rate, of the plurality of regions of the bottom surface, so as to reflect a heat, which is radiant from the bottom surface, to the bottom surface again. A second region (R2) of the lower reflectance device (R) having a lower heat reflectance than that of the first region may be provided on a lower side of a region, having a low heat absorption rate, of the plurality of regions of the bottom surface, so as to less reflect heat, which is radiant from the bottom surface, than the first region. A third region (R3) of the lower reflectance device (R) having a lower heat reflectance than that of the second region may be provided on a lower side of a region, having a low heat absorption rate, of the plurality of regions of the bottom surface, so as to less reflect heat, which is radiant from the bottom surface, than the second region. The first region having the high heat reflectance may be provided in a white color, and the third region having the low heat reflectance may be provided in a black color. The heat reflectance of the lower reflection device (R) may be adjusted by a color, as mentioned above, but is not limited thereto. Therefore, it may be adjusted in various ways.

Embodiments relating to the lower reflection device (R) shown in FIG. 18 may be combined with the above mentioned various embodiments of the cooking apparatus 1. That is, embodiments relating to the lower reflection device(R) shown in FIG. 18 may be included in the cooking apparatus 1 according to the embodiment including a single heater 22 and the reflection device 100, and the cooking apparatus 1 according to the embodiment including a plurality of heaters 22a and 22b and the reflection device 100.

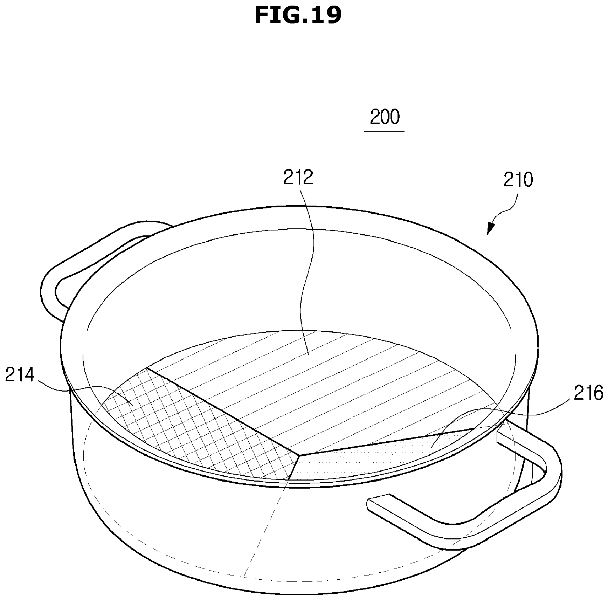

As illustrated in FIG. 17, the plurality of regions each having a different heat absorption rate may be provided on the bottom surface of the cooking compartment of the cooking apparatus 1, and a plurality of regions each having a different heat absorption rate may be provided on a bottom surface of a cooking ware 200. FIGS. 19 to 21 are views illustrating a cooking ware, not being part of the invention.

Referring to FIG. 19, according to an embodiment, not being part of the invention, a body 210 of the cooking ware 200 may include a plurality of regions 212, 214, and 216 each having a different heat absorption rate, on a bottom surface in which a cooking material is placed. For example, among the plurality of regions, a first region 212 may have a higher heat absorption rate than that of a second region 214, and the second region 214 may have a higher heat absorption rate than that of a third region 216. The plurality of regions may be implemented by respective materials having different respective specific heat or respective phase change materials. For example, each of the plurality of regions may be implemented with any one material selected from substances such as tetradecane, octadecane or nonadecane. The selected material may have different densities in the respective areas so that the heat absorption rate of the plurality of regions is different from each other. The heat absorption rate may vary by changing the ratio of the above mentioned selected material included in plurality of regions. Alternatively, it may be achieved that the heat absorption rate in each region differs from each other through a combination of the materials. The material forming the plurality of regions of the bottom surface of the cooking ware 200 is not limited thereto, and thus the plurality of regions of the bottom surface of the cooking ware 200 may be implemented by a variety of materials.

The number of the plurality of regions of the bottom surface of the cooking ware 200 may correspond to the number of the plurality of regions of the reflection device 100 included in the cooking apparatus 1, and when the heater of the cooking apparatus 1 is provided in plural, the number of the plurality of regions of the bottom surface of the cooking ware 200 may correspond to the number of the heater.

Among the plurality of regions of the bottom surface of the cooking ware 200, a region having a high heat absorption rate may be placed inside of the cooking compartment to correspond to a region of the reflection device 100 having a low reflectance, or correspond to the heater, which is controlled to have a high output, among the plurality of heaters 22a and 22b. In addition, a region having a low heat absorption rate among the plurality of regions of the bottom surface of the cooking ware 200 may be placed inside of the cooking compartment to correspond to a region of the reflection device 100 having a high reflectance, or correspond to the heater, which is controlled to have a low output, among the plurality of heaters 22a and 22b.

Although not shown in the drawings, the plurality of regions of the bottom surface of the cooking ware 200 may be apart from each other with a predetermined interval to prevent thermal conductivity among the plurality of regions. Alternatively, the plurality of regions of the bottom surface of the cooking ware 200 may include a material having a low thermal conductivity, e.g. teflon, ceramic and aerogel, in a space between the regions to prevent the thermal conductivity among the plurality of regions.

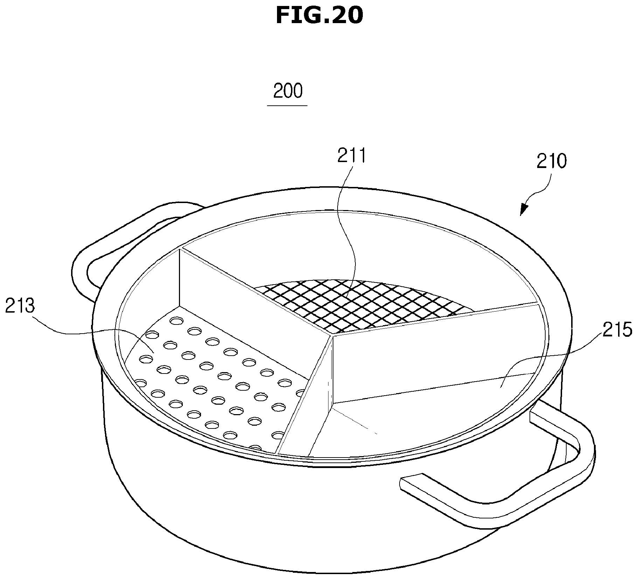

As illustrated in FIG. 19, the bottom surface of the cooking ware 200 may be configured to have a different heat absorption rate and the bottom surface of the cooking ware 200 may be configured to cook according to a different cooking recipe, as illustrated in FIG. 20.

For example, as illustrated in FIG. 20, a grill 211 may be installed in any one region of the plurality of regions of the bottom surface of the cooking ware 200 so that a cooking is performed according to a grill cooking method. The grill may be provided to correspond to the size and shape of the region, in which the grill is then installed, and then installed on the corresponding region. The grill may be detachably installed in the corresponding region. When the grill is heated by heat generated by the heater 22, a cooking material placed on the grill may be cooked by the heated grill.

As illustrated in FIG. 20, a water storage space and a supporting unit 213 may be installed in other region of the plurality of regions of the bottom surface of the cooking ware 200 so that a steam-cooking is performed by the steam, wherein the water storage space stores water and the supporting unit 213 is provided on an upper surface of the water storage space to have a large number of holes formed to pass steam therethrough. A cooking material may be placed on the supporting unit 213. When water in the water storage space is heated and then steam is generated, the steam-cooking may be performed on the cooking material placed on the supporting unit 213 by the steam passing through the hole of the supporting unit 213. The supporting unit 213 may be provided to correspond to the size and shape of the region, in which the supporting unit 213 is then installed, and then installed on the corresponding region. In addition, the supporting unit 213 may be detachably installed on the corresponding region.

As illustrated in FIG. 20, the remaining region 215 of the plurality of regions of the bottom surface of the cooking ware 200 may be configured to perform a recipe to cook a cooking material by warming up the cooking material. Unlike the grill cooking and the steam cooking, the region for warming up the cooking material may not need an additional structure. A bottom surface of the region for warming up the cooking material may be implemented by a material having a predetermined heat absorption rate so that warming up the cooking material is efficiently performed.

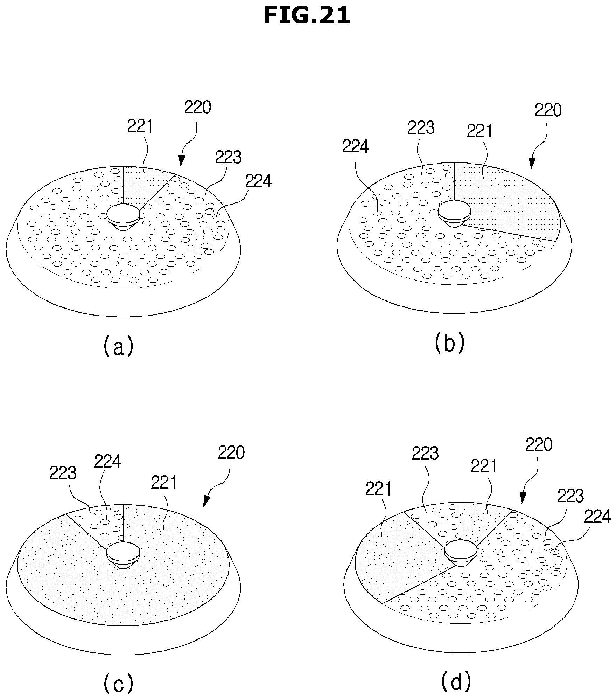

The above mentioned cooking ware 200 may include a lid 220 of the cooking ware 200, which is in a conventional manner and formed of material penetrating electromagnetic waves, wherein the material is one of the material of the cooking ware 200 of the cooking apparatus 1. Alternatively, as illustrated in FIGS. 21A-21D, the lid 220 of the cooking ware 200 may include a first region 221 shielding the electromagnetic waves incident to the lid 220, and a second region 223 in which a large number of hole 224 is provided to penetrate the electromagnetic wave. The lid 220 shown in FIGS. 21A-21D may have a structure similar to the structure of the reflection device 100 shown in FIGS. 10A-10D. The size of the first region 221 and the second region 223 of the lid 220 may be adjustable, as illustrated in FIGS. 21A-21D. That is, as illustrated in FIGS. 21A to 21C, when the area of the first region 221 is increased, the area of the second region 223 may be reduced as much as the increased area of the first region 221, and in contrast, when the area of the second region 223 is increased, the area of the first region 221 may be reduced as much as the increased area of the second region 223. In addition, as illustrated in FIG. 21D, the first region 221 and the second region 223 may include at least two regions, respectively.

As for the lid 220 shown in FIGS. 21A-21D, the second region 223 may be provided to correspond to the shape of the body 210 of the cooking ware 200 to cover the size of the body 210 of the cooking ware 200. The first region 221 may be configured to be spread or closed like as a fan, on a lower surface or an upper surface of the second region 223 so that the first region 221 is configured to adjust the area of the second region 223. The above mentioned structure is an example, and thus the lid 220 of the cooking ware 200 may be implemented using a variety of structures configured to adjust the area of the first region 221 and the second region 223.

The first region 221 and the second region 223 of the lid 220 of the cooking ware 200 shown in FIGS. 21A-21D may be implemented by galvanized iron, iron, aluminum or copper, and the second region 223 may be formed such that a large number of holes are formed in the above-mentioned materials. In addition, as for the lid 220, the reflectance, absorption, or radiation rate of the heat generated by the heater 22 may be adjusted by a coating process on the above-mentioned materials.

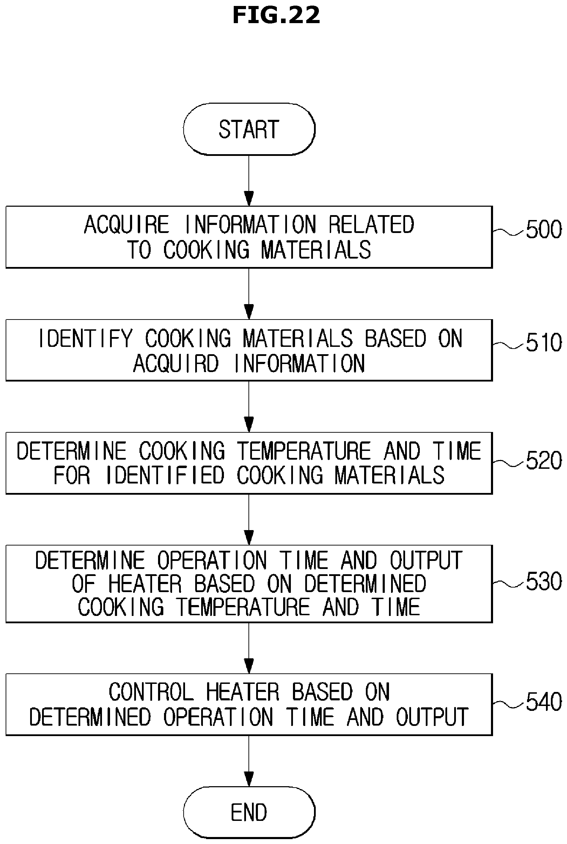

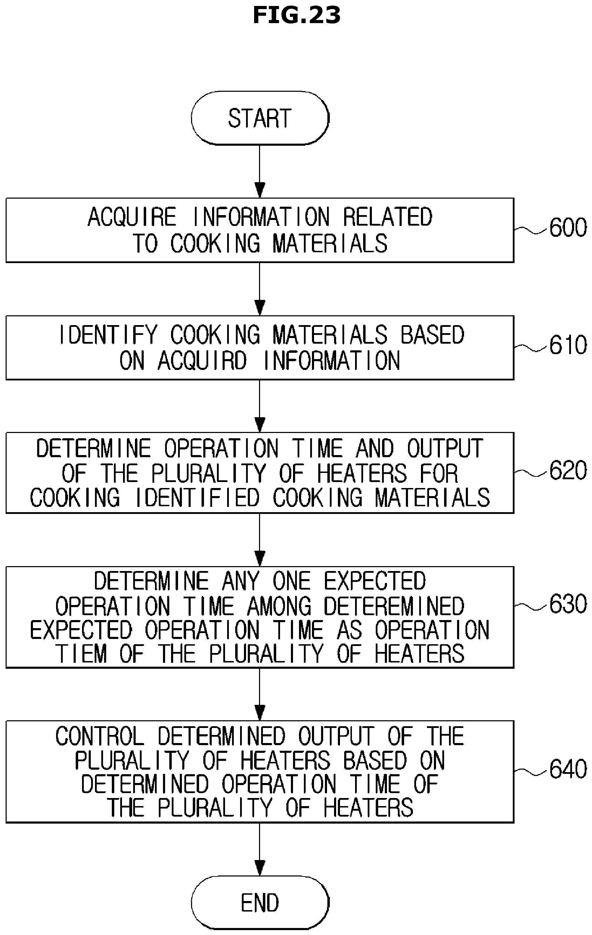

FIGS. 22 and 23 are flowcharts illustrating a control method of the cooking apparatus 1 in accordance with one embodiment. FIG. 22 illustrates a control method of the heater 22 when the heater 22 of the cooking apparatus 1 is single. Referring to FIG. 22, when the sensor 5 of the cooking apparatus 1 acquires information related to the cooking material (500), the controller 150 may identify the cooking material based on the information detected by the sensor 5 (510), and determine a cooking temperature and time required for the identified cooking material (520).

The controller 150 of the cooking apparatus 1 may identify the cooking material based on the information of the cooking material detected by the sensor 5 and determine a cooking temperature and time required for cooking the identified cooking material. The controller 150 may determine the cooking temperature and time required for cooking the identified cooking material by matching cooking data including a predetermined cooking temperature and time according to a cooking material, with the identified cooking material.

The controller 150 may determine an operation time and output of the heater 22 based on the determined cooking temperature and time of the cooking materials (530), and control the operation of the heater 22 based on the determined operation time and output (540).

The controller 150 may determine an operation time and output of the heater 22 based on the cooking temperature and time of the identified cooking materials and the reflectance of the each region of the reflection device 100, and drive the heater 22 based on the determined operation time and output.

For example, the controller 150 may determine the cooking temperature and time of the cooking materials and drive the heater 22 for the determined cooking time so that cooking of the cooking materials is completed at the same time. The controller 150 may determine the longest cooking time between the cooking times of the plurality of cooking materials as an operation time of the heater 22. As for the cooking material requiring a shorter cooking time than the determined operation time of the heater 22, since a cooking time thereof is increased, it may be appropriate that the corresponding cooking material is cooked at a lower cooking temperature than a predetermined cooking temperature. As mentioned above, the controller 150 may adjust the cooking temperature of the plurality of cooking materials based on the determined operation time of the heater 22, and determine an output of the heater 22 by considering the reflectance of the plurality of regions of the reflection device 100 so that the cooking materials are cooked at the adjusted cooking temperature. The controller 150 may control the operation of the heater 22 based on the determined operation time and output of the heater 22.

During cooking the cooking material, when a cooking state of the cooking material is detected by the sensor 5, the controller 150 may appropriately adjust the operation of the heater 22 for the cooking state according to a change in the cooking state of the cooking material. For example, when it is determined that the cooking material is quickly cooked based on an image of the cooking material displayed on an image acquired by the camera, the controller 150 may reduce the output or the operation time of the heater.

FIG. 23 illustrates a control method of the heater 22 when the heater 22 of the cooking apparatus 1 is provided in plural. Referring to FIG. 23, when the sensor 5 of the cooking apparatus 1 acquires information related to the cooking material (600), the controller 150 may identify the cooking material based on the information detected by the sensor 5 (610), and determine an expected operation time and output of the plurality of heaters 22a and 22b required for cooking the identified cooking material (620).

The controller 150 of the cooking apparatus 1 may identify the cooking material based on the information of the cooking material detected by the sensor 5 and determine a cooking temperature and time required for cooking the identified cooking material. The controller 150 may determine the cooking temperature and time required for cooking the identified cooking material by matching cooking data including a predetermined cooking temperature and time according to a cooking material, with the identified cooking material. The controller 150 may determine an expected operation time and an output of the plurality of heaters 22a and 22b based on the reflectance of each region of the reflection device 100 and the cooking temperature and time of the identified cooking material, and drive the heater 22 based on the determined expected operation time and output.

For example, the controller 150 may determine the cooking temperature and time of the cooking materials and drive the plurality of heaters 22a and 22b for the determined cooking time so that cooking of the cooking materials is completed at the same time. That is, when a first cooking time is required to cook the first cooking material (F1), the controller 150 may determine the first cooking time as an expected operation time of the first heater 22a, and when a second cooking time is required to cook the second cooking material (F2), the controller 150 may determine the second cooking time as an expected operation time of the second heater 22b. When the first cooking time is required to cook the first cooking material (F1), the controller 150 may determine an output (a first output) of the first heater 22a based on the first cooking time, and when the second cooking time is required to cook the second cooking material (F2), the controller 150 may determine an output (a second output) of the second heater 22b based on the second cooking time.

The controller 150 may determine anyone expected operation time among the determined expected time as an operation time of the plurality of heaters 22a and 22b (630), and adjust the determined output of the plurality of heaters 22a and 22b based on the determined operation time of the plurality of heaters 22a and 22b (640).

The controller 150 may determine the longest expected operation time between the expected operation time of the plurality of heaters 22a and 22b as an expected operation time of the plurality of heaters 22a and 22b. For example, when the expected operation time of the first heater 22a is longer than that of the second heater 22b, the controller 150 may determine the expected operation time of the first heater 22a as an expected operation time of the first heater 22a and the second heater 22b. As for the second heater 22b having the shorter expected operation time than the determined operation time, since an operation time thereof is increased, it may be appropriate that the second cooking material (F2) cooked by the second heater 22b is cooked at a lower cooking temperature than a predetermined second cooking temperature. Therefore, the controller 150 may control an operation of the second heater 22b so that the output of the second heater 22b is reduced than the second output. In addition, the controller 150 may adjust an output of the second heater 22b by considering the reflectance of the region of the reflection device 100 corresponding to the second heater 22b.

The controller 150 may determine the shortest expected operation time between the expected operation time of the plurality of heaters 22a and 22b as an expected operation time of the plurality of heaters 22a and 22b. For example, when the expected operation time of the second heater 22b is shorter than that of the first heater 22a, the controller 150 may determine the expected operation time of the second heater 22b as an expected operation time of the first heater 22a and the second heater 22b. As for the first heater 22a having the longer expected operation time than the determined operation time, since an operation time thereof is reduced, it may be appropriate that the first cooking material (F1) cooked by the first heater 22a is cooked at a higher cooking temperature than a predetermined first cooking temperature. Therefore, the controller 150 may control an operation of the first heater 22a so that the output of the first heater 22a is increased than the first output. In addition, the controller 150 may adjust an output of the first heater 22a by considering the reflectance of the region of the reflection device 100 corresponding to the first heater 22a.

The controller 150 may determine an output of the plurality of heaters 22a and 22b by considering the determined operation time of the heater and the reflectance of the plurality of regions of the reflection device 100, and control the operation of the plurality of heaters 22a and 22b based on the determined output and operation time of the heater.

During cooking the cooking material, when a cooking state of the cooking material is detected by the sensor 5, the controller 150 may appropriately adjust the operation of the heater for the cooking state according to a change in the cooking state of the cooking material. For example, when it is determined that the cooking material is quickly cooked based on an image of the cooking material displayed on an image acquired by the camera, the controller 150 may reduce the output or the operation time of the heater.

As is apparent from the above description, according to the proposed cooking apparatus and control method thereof, it may be possible to reduce a cooking time since the plurality of cooking materials is cooked at one time.

Since the plurality of cooking materials is cooked at one time, the energy consumption may be reduced in comparison with a case in which the plurality of cooking materials is independently cooked.

### Description of symbols

- 22:: heater
- 100:: reflection device
- 125:: reflector
- R:: lower reflection device
- 200:: cooking ware

## Claims

1. A cooking oven (1) comprising:
at least one heater (22; 22a, 22b); and
a reflection device (100) provided in a lower side of the heater and facing the at least one heater (22; 22a, 22b), and having a plurality of regions, each of the plurality of regions having a different respective reflectance against heat generated by the at least one heater (22; 22a, 22b), in order to cook a plurality of cooking materials each having a different cooking temperature,
wherein the reflection device (100) is implemented by a shape and an area configured to cover an entire shape and area of the at least one heater (22; 22a, 22b).

2. The cooking oven (1) of claim 1, wherein
the device (100) further comprises a reflector (125) provided in a boundary between the plurality of regions of the reflection device (100) to reflect incident electromagnetic waves to reduce interference between electromagnetic waves generated by the heater (22; 22a, 22b) and passing through the plurality of regions.

3. The cooking oven (1) of claim 2, wherein
the reflector (125) protrudes a predetermined length from a surface of the reflection device (100) that is opposite to a surface of the reflection device (100) facing the at least one heater (22; 22a, 22b).

4. The cooking oven (1) of claim 3, wherein
the plurality of regions are spaced apart from each other across a separating space,
and
the reflector (125) is provided in the separating space to reduce heat conduction between the plurality of regions.

5. The cooking oven (1) of claim 1, wherein
the reflection device (100) comprises a plurality of coating layers (120) respectively provided in the plurality of regions,
each of the plurality of coating layers (120) have a different respective reflectance, and
each of the plurality of coating layers (120) is provided on at least one of a first surface of the reflection device (100) facing the at least one heater (22; 22a, 22b) and a second surface of the reflection device (100) opposite to the first surface.

6. The cooking oven (1) of claim 1, wherein
the reflection device (100) comprises at least one glass (110), wherein the reflectance of each of the plurality of regions of the reflection device (100) is adjusted by at least one of the thickness or reflectance of the glass, the reflectance of a coating layer provided in the glass, and pigments mixed in the glass.

7. The cooking oven (1) of claim 1, wherein
each of the plurality of regions of the reflection device (100) comprises a lens, the lens having a convex shape on a surface of the lens opposite to a surface of the lens facing the at least one heater (22; 22a, 22b).

8. The cooking oven (10) of claim 1, wherein
the cooking oven (1) comprises a bottom surface to receive a cooking material,
the bottom surface of the cooking oven (1) comprises a plurality of regions (L1; L2) each having a different respective heat absorption rate, and
the plurality of regions (L1; L2) of the bottom surface correspond to the plurality of regions of the reflection device (100).

9. The cooking oven (1) of claim 8, wherein
the plurality of regions (L1; L2) of the bottom surface are spaced apart from each other to reduce heat conduction therebetween.

10. The cooking oven (1) of claim 9, wherein
the plurality of regions (L1; L2) of the bottom surface are spaced apart from each other by a separating space, and
the bottom surface comprises a material, having a lower heat conductivity than that of a material of the plurality of regions (L1; L2), provided in the separating space to reduce heat conduction between the plurality of regions (L1; L2) of the bottom surface.

11. The cooking oven (1) of claim 1, further comprising:
a lower reflection device (R) provided in a lower side of the bottom surface of the cooking oven (1) and provided with a plurality of regions (Rl; R2) corresponding the plurality of regions of the reflection device (100),
wherein the plurality of regions (Rl; R2) of the lower reflection device each has a different respective heat reflectance.

12. The cooking oven (1) of claim 1, wherein
the reflection device (100) comprises at least one first region (124) blocking electromagnetic waves generated by the at least one heater (22; 22a, 22b) and at least one second region (126) passing through the electromagnetic waves generated by the at least one heater (22; 22a, 22b),
the at least one second region (126) comprises a plurality of holes (H) so that the electromagnetic waves pass therethrough, and
an area of the at least one first region (124) is adjustable such that:
when the area of the first region (124) is adjusted to be increased, an area of the second region (126) adjacent to the increased area of the first region (124) is reduced, and
when the area of the first region (124) is adjusted to be reduced, an area of the second region (126) adjacent to the reduced area of the first region (124) is increased.

13. A control method to control a cooking oven (1) according to one of the precedent claims, the cooking oven comprising at least one heater (22; 22a, 22b); and
a reflection device (100) provided in a lower side of the heater and facing the at least one heater (22; 22a, 22b), and having a plurality of regions, each of the plurality of regions having a different respective reflectance against heat generated by the at least one heater (22; 22a, 22b), in order to cook a plurality of cooking materials each having a different cooking temperature,
the control method comprising:
identifying (610) a plurality of cooking materials by a sensor (5) included in the cooking oven;
determining (620) respective expected operation times and respective outputs of the plurality of heaters (22a, 22b) for respectively cooking the plurality of identified cooking materials based on the reflectance of each region of the reflection device (100);
determining (630) any one among the expected operation times as an operation time of the plurality of heaters (22a, 22b); and
controlling (640) output of the plurality of heaters (22a, 22b) based on the determined operation time of the plurality of heaters (22a, 22b).

14. The control method of claim 13, wherein
the determining the any one among the expected operation times comprises determining a maximum expected operation time among the determined expected operation times, as the operation time of the plurality of heaters (22a, 22b), and
the controlling the output of the plurality of heaters (22a, 22b) comprises, when a heater (22a, 22b) among the plurality of heaters (22a, 22b) has a shorter expected operation time than the determined maximum operation time, controlling an output of the heater (22a, 22b) to be lower than the respective determined output of the heater (22a, 22b).

15. The control method of claim 13, wherein
the determining the any one among the expected operation times comprises determining a minimum expected operation time among the determined expected operation times, as an operation time of the plurality of heaters (22a, 22b), and
the controlling the output of the plurality of heaters (22a, 22b) comprises, when a heater (22a, 22b) among the plurality of heaters (22a, 22b) has a longer expected operation time than the determined minimum operation time, controlling an output of the heater (22a, 22b) to be higher than the respective determined output of the heater (22a, 22b).

## Patentansprüche

1. Backofen (1), umfassend:
mindestens ein Heizelement (22; 22a, 22b); und
eine Reflexionsvorrichtung (100), die in einer unteren Seite des Heizelements vorgesehen und dem mindestens einen Heizelement (22; 22a, 22b) zugewandt ist und eine Mehrzahl von Bereichen aufweist, wobei jeder der Mehrzahl von Bereichen ein unterschiedliches jeweiliges Reflexionsvermögen gegenüber der von dem mindestens einen Heizelement (22; 22a, 22b) erzeugten Hitze aufweist, um eine Mehrzahl von Kochgütern zu kochen, die jeweils eine unterschiedliche Kochtemperatur aufweisen,
wobei die Reflexionsvorrichtung (100) durch eine Form und eine Fläche realisiert ist, die konfiguriert sind, um eine gesamte Form und Fläche des mindestens einen Heizelements (22; 22a, 22b) abzudecken.

2. Backofen (1) nach Anspruch 1, wobei
die Vorrichtung (100) ferner einen Reflektor (125) umfasst, der in einer Grenze zwischen der Mehrzahl von Bereichen der Reflexionsvorrichtung (100) vorgesehen ist, um einfallende elektromagnetische Wellen zu reflektieren, um die Interferenz zwischen elektromagnetischen Wellen zu reduzieren, die von dem Heizelement (22; 22a, 22b) erzeugt werden und die Mehrzahl von Bereichen durchlaufen.

3. Backofen (1) nach Anspruch 2, wobei
der Reflektor (125) um eine vorbestimmte Länge von einer Oberfläche der Reflexionsvorrichtung (100) vorsteht, die entgegengesetzt zu einer Oberfläche der Reflexionsvorrichtung (100) ist, die dem mindestens einen Heizelement (22; 22a, 22b) zugewandt ist.

4. Backofen (1) nach Anspruch 3, wobei
die Mehrzahl von Bereichen durch einen Trennraum voneinander beabstandet sind, und
der Reflektor (125) in dem Trennraum vorgesehen ist, um die Wärmeleitung zwischen der Mehrzahl von Bereichen zu reduzieren.

5. Backofen (1) nach Anspruch 1, wobei
die Reflexionsvorrichtung (100) eine Mehrzahl von Beschichtungsschichten (120) umfasst, die jeweils in der Mehrzahl von Bereichen vorgesehen sind,
wobei jede der Mehrzahl von Beschichtungsschichten (120) ein unterschiedliches jeweiliges Reflexionsvermögen aufweist, und
jede der Mehrzahl von Beschichtungsschichten (120) auf mindestens einer von einer ersten Oberfläche der Reflexionsvorrichtung (100), die dem mindestens einen Heizelement (22; 22a, 22b) zugewandt ist, und einer zweiten Oberfläche der Reflexionsvorrichtung (100), die zu der ersten Oberfläche entgegengesetzt ist, vorgesehen ist.

6. Backofen (1) nach Anspruch 1, wobei
die Reflexionsvorrichtung (100) mindestens ein Glas (110) umfasst, wobei das Reflexionsvermögen jedes der Mehrzahl von Bereichen der Reflexionsvorrichtung (100) durch mindestens eines von der Dicke oder dem Reflexionsvermögen des Glases, dem Reflexionsvermögen einer in dem Glas vorgesehenen Beschichtungsschicht und in das Glas gemischten Pigmenten eingestellt wird.

7. Backofen (1) nach Anspruch 1, wobei
jeder der Mehrzahl von Bereichen der Reflexionsvorrichtung (100) eine Linse umfasst, wobei die Linse eine konvexe Form auf einer Oberfläche der Linse aufweist, die entgegengesetzt zu einer Oberfläche der Linse ist, die dem mindestens einen Heizelement (22; 22a, 22b) zugewandt ist.

8. Backofen (10) nach Anspruch 1, wobei
der Backofen (1) eine Bodenfläche zur Aufnahme eines Kochgutes aufweist,
die Bodenfläche des Backofens (1) eine Mehrzahl von Bereichen (L1; L2) umfasst, die jeweils eine unterschiedliche Wärmeabsorptionsrate aufweisen, und
die Mehrzahl von Bereichen (L1; L2) der Bodenfläche der Mehrzahl von Bereichen der Reflexionsvorrichtung (100) entsprechen.

9. Backofen (1) nach Anspruch 8, wobei
die Mehrzahl von Bereichen (L1; L2) der Bodenfläche voneinander beabstandet sind, um die Wärmeleitung dazwischen zu reduzieren.

10. Backofen (1) nach Anspruch 9, wobei
die Mehrzahl von Bereichen (L1; L2) der Bodenfläche durch einen Trennraum voneinander beabstandet sind, und
die Bodenfläche ein Material mit einer geringeren Wärmeleitfähigkeit als die eines Materials der Mehrzahl von Bereichen (L1; L2) umfasst, das in dem Trennraum vorgesehen ist, um die Wärmeleitung zwischen der Mehrzahl von Bereichen (L1; L2) der Bodenfläche zu reduzieren.

11. Backofen (1) nach Anspruch 1, ferner umfassend:
eine untere Reflexionsvorrichtung (R), die in einer unteren Seite der Bodenfläche des Backofens (1) vorgesehen und mit einer Mehrzahl von Bereichen (R1; R2) versehen ist, die der Mehrzahl von Bereichen der Reflexionsvorrichtung (100) entspricht,
wobei die Mehrzahl von Bereichen (R1; R2) der unteren Reflexionsvorrichtung jeweils ein unterschiedliches jeweiliges Wärmereflexionsvermögen aufweist.

12. Backofen (1) nach Anspruch 1, wobei
die Reflexionsvorrichtung (100) mindestens einen ersten Bereich (124), der elektromagnetische Wellen blockiert, die von dem mindestens einen Heizelement (22; 22a, 22b) erzeugt werden, und mindestens einen zweiten Bereich (126), der die von dem mindestens einen Heizelement (22; 22a, 22b) erzeugten elektromagnetischen Wellen durchlässt, umfasst,
der mindestens eine zweite Bereich (126) eine Mehrzahl von Löchern (H) umfasst, sodass die elektromagnetischen Wellen diese durchlaufen, und
eine Fläche des mindestens einen ersten Bereichs (124) so einstellbar ist, dass:
wenn die Fläche des ersten Bereichs (124) so eingestellt wird, dass sie vergrößert wird, eine Fläche des zweiten Bereichs (126), die an die vergrößerte Fläche des ersten Bereichs (124) angrenzt, verringert wird, und
wenn die Fläche des ersten Bereichs (124) so eingestellt wird, dass sie verkleinert wird, eine Fläche des zweiten Bereichs (126), die an die verkleinerte Fläche des ersten Bereichs (124) angrenzt, vergrößert wird.

13. Steuerungsverfahren zur Steuerung eines Backofens (1) nach einem der vorhergehenden Ansprüche, wobei der Backofen mindestens ein Heizelement (22; 22a, 22b) umfasst; und
eine Reflexionsvorrichtung (100), die in einer unteren Seite des Heizelements vorgesehen und dem mindestens einen Heizelement (22; 22a, 22b) zugewandt ist und eine Mehrzahl von Bereichen aufweist, wobei jeder der Mehrzahl von Bereichen ein unterschiedliches jeweiliges Reflexionsvermögen gegenüber der von dem mindestens einen Heizelement (22; 22a, 22b) erzeugten Hitze aufweist, um eine Mehrzahl von Kochgütern zu kochen, die jeweils eine unterschiedliche Kochtemperatur aufweisen,
wobei das Steuerungsverfahren umfasst:
Identifizieren (610) einer Mehrzahl von Kochgütern durch einen im Backofen enthaltenen Sensor (5);
Bestimmen (620) jeweiliger erwarteter Betriebszeiten und jeweiliger Leistungen der Mehrzahl von Heizelementen (22a, 22b) zum jeweiligen Kochen der Mehrzahl identifizierter Kochgüter basierend auf dem Reflexionsvermögen jedes Bereichs der Reflexionsvorrichtung (100);
Bestimmen (630) einer beliebigen unter den erwarteten Betriebszeiten als eine Betriebszeit der Mehrzahl von Heizelementen (22a, 22b); und
Steuern (640) der Leistung der Mehrzahl von Heizelementen (22a, 22b) basierend auf der bestimmten Betriebszeit der Mehrzahl von Heizelementen (22a, 22b).

14. Steuerungsverfahren nach Anspruch 13, wobei
das Bestimmen der beliebigen unter den erwarteten Betriebszeiten das Bestimmen einer maximalen erwarteten Betriebszeit unter den bestimmten erwarteten Betriebszeiten als die Betriebszeit der Mehrzahl von Heizelementen (22a, 22b) umfasst, und
das Steuern der Leistung der Mehrzahl von Heizelementen (22a, 22b), wenn ein Heizelement (22a, 22b) unter der Mehrzahl von Heizelementen (22a, 22b) eine kürzere erwartete Betriebszeit als die bestimmte maximale Betriebszeit aufweist, das Steuern einer Leistung des Heizelements (22a, 22b) so umfasst, dass sie niedriger ist als die jeweilige bestimmte Leistung des Heizelements (22a, 22b).

15. Steuerungsverfahren nach Anspruch 13, wobei
das Bestimmen der beliebigen unter den erwarteten Betriebszeiten das Bestimmen einer minimalen erwarteten Betriebszeit unter den bestimmten erwarteten Betriebszeiten als eine Betriebszeit der Mehrzahl von Heizelementen (22a, 22b) umfasst, und
das Steuern der Leistung der Mehrzahl von Heizelementen (22a, 22b), wenn ein Heizelement (22a, 22b) unter der Mehrzahl von Heizelementen (22a, 22b) eine längere erwartete Betriebszeit als die bestimmte minimale Betriebszeit aufweist, das Steuern einer Leistung des Heizelements (22a, 22b) so umfasst, dass sie höher ist als die jeweilige bestimmte Leistung des Heizelements (22a, 22b).

## Revendications

1. Four de cuisson (1) comprenant :
au moins un élément chauffant (22 ; 22a, 22b) ; et
un dispositif de réflexion (100) prévu dans un côté inférieur de l'élément chauffant et en regard de l'au moins un élément chauffant (22 ; 22a, 22b), et présentant une pluralité de régions, chacune de la pluralité de régions présentant une réflectivité respective différente par rapport à la chaleur générée par l'au moins un élément chauffant (22 ; 22a, 22b), afin de cuire une pluralité de matières de cuisson présentant chacune une température de cuisson différente,
dans lequel le dispositif de réflexion (100) est mis en œuvre par une forme et une zone configurées pour couvrir une forme et une zone entières de l'au moins un élément chauffant (22 ; 22a, 22b).

2. Four de cuisson (1) selon la revendication 1, dans lequel
le dispositif (100) comprend en outre un réflecteur (125) prévu à une frontière entre la pluralité de régions du dispositif de réflexion (100) pour réfléchir des ondes électromagnétiques incidentes afin de réduire les interférences entre les ondes électromagnétiques générées par l'élément chauffant (22 ; 22a, 22b) et passant à travers la pluralité de régions.

3. Four de cuisson (1) selon la revendication 2, dans lequel
le réflecteur (125) fait saillie sur une longueur prédéterminée à partir d'une surface du dispositif de réflexion (100) qui est opposée à une surface du dispositif de réflexion (100) en regard de l'au moins un élément chauffant (22 ; 22a, 22b).

4. Four de cuisson (1) selon la revendication 3, dans lequel
la pluralité de régions sont espacées les unes des autres à travers un espace de séparation,
et
le réflecteur (125) est prévu dans l'espace de séparation pour réduire la conduction de chaleur entre la pluralité de régions.

5. Four de cuisson (1) selon la revendication 1, dans lequel
le dispositif de réflexion (100) comprend une pluralité de couches de revêtement (120) respectivement prévues dans la pluralité de régions,
chacune de la pluralité de couches de revêtement (120) présente une réflectivité respective différente, et
chacune de la pluralité de couches de revêtement (120) est prévue sur au moins une surface parmi une première surface du dispositif de réflexion (100) en regard de l'au moins un élément chauffant (22 ; 22a, 22b) et une seconde surface du dispositif de réflexion (100) opposée à la première surface.

6. Four de cuisson (1) selon la revendication 1, dans lequel
le dispositif de réflexion (100) comprend au moins une vitre (110), dans lequel la réflectivité de chacune de la pluralité de régions du dispositif de réflexion (100) est réglée par au moins un élément parmi l'épaisseur ou la réflectivité de la vitre, la réflectivité d'une couche de revêtement prévue dans la vitre, et des pigments mélangés dans la vitre.

7. Four de cuisson (1) selon la revendication 1, dans lequel
chacune de la pluralité de régions du dispositif de réflexion (100) comprend une lentille, la lentille présentant une forme convexe sur une surface de la lentille opposée à une surface de la lentille en regard de l'au moins un élément chauffant (22 ; 22a, 22b).

8. Four de cuisson (10) selon la revendication 1, dans lequel
le four de cuisson (1) comprend une surface de fond pour recevoir une matière de cuisson,
la surface de fond du four de cuisson (1) comprend une pluralité de régions (L1 ; L2) présentant chacune un coefficient d'absorption de chaleur respectif différent, et
la pluralité de régions (L1 ; L2) de la surface de fond correspond à la pluralité de régions du dispositif de réflexion (100).

9. Four de cuisson (1) selon la revendication 8, dans lequel
la pluralité de régions (L1 ; L2) de la surface de fond sont espacées les unes des autres afin de réduire la conduction de chaleur entre elles.

10. Four de cuisson (1) selon la revendication 9, dans lequel
la pluralité de régions (L1 ; L2) de la surface de fond sont espacées les unes des autres par un espace de séparation, et
la surface de fond comprend un matériau présentant une conductivité thermique inférieure à celle d'un matériau de la pluralité de régions (L1 ; L2), prévu dans l'espace de séparation afin de réduire la conduction de chaleur entre la pluralité de régions (L1 ; L2) de la surface de fond.

11. Four de cuisson (1) selon la revendication 1, comprenant en outre :
un dispositif de réflexion inférieur (R) prévu dans un côté inférieur de la surface de fond du four de cuisson (1) et muni d'une pluralité de régions (R1 ; R2) correspondant à la pluralité de régions du dispositif de réflexion (100),
dans lequel la pluralité de régions (R1 ; R2) du dispositif de réflexion inférieur présente chacune une réflectivité thermique respective différente.

12. Four de cuisson (1) selon la revendication 1, dans lequel
le dispositif de réflexion (100) comprend au moins une première région (124) bloquant des ondes électromagnétiques générées par l'au moins un élément chauffant (22 ; 22a, 22b) et au moins une seconde région (126) passant à travers les ondes électromagnétiques générées par l'au moins un élément chauffant (22 ; 22a, 22b),
l'au moins une seconde région (126) comprend une pluralité de trous (H) de sorte que les ondes électromagnétiques passent à travers ceux-ci, et
une zone de l'au moins une première région (124) peut être réglée de sorte que :
lorsque la zone de la première région (124) est réglée pour être augmentée, une zone de la seconde région (126) adjacente à la zone augmentée de la première région (124) est réduite, et
lorsque la zone de la première région (124) est réglée pour être réduite, une zone de la seconde région (126) adjacente à la zone réduite de la première région (124) est augmentée.

13. Procédé de commande afin de commander un four de cuisson (1) selon une des revendications précédentes, le four de cuisson comprenant
au moins un élément chauffant (22 ; 22a, 22b) ; et
un dispositif de réflexion (100) prévu dans un côté inférieur de l'élément chauffant et en regard de l'au moins un élément chauffant (22 ; 22a, 22b), et présentant une pluralité de régions, chacune de la pluralité de régions présentant une réflectivité respective différente par rapport à la chaleur générée par l'au moins un élément chauffant (22 ; 22a, 22b), afin de cuire une pluralité de matières de cuisson présentant chacune une température de cuisson différente,
le procédé de commande comprenant :
l'identification (610) d'une pluralité de matières de cuisson par un capteur (5) inclus dans le four de cuisson ;
la détermination (620) de durées de fonctionnement attendues respectives et de rendements respectifs de la pluralité d'éléments chauffants (22a, 22b) pour la cuisson respectivement de la pluralité de matières de cuisson identifiées su la base de la réflectivité de chaque région du dispositif de réflexion (100) ;
la détermination (630) d'une quelconque durée de fonctionnement parmi les durées de fonctionnement attendues comme durée de fonctionnement de la pluralité d'éléments chauffants (22a, 22b) ; et
la commande (640) du rendement de la pluralité d'éléments chauffants (22a, 22b) sur la base de la durée de fonctionnement déterminée de la pluralité d'éléments chauffants (22a, 22b).

14. Procédé de commande selon la revendication 13, dans lequel
la détermination d'une quelconque durée de fonctionnement parmi les durées de fonctionnement attendues comprend la détermination d'une durée de fonctionnement attendue maximale parmi les durées de fonctionnement attendues déterminées, comme durée de fonctionnement de la pluralité d'éléments chauffants (22a, 22b), and
la commande du rendement de la pluralité d'éléments chauffants (22a, 22b) comprend, lorsqu'un élément chauffant (22a, 22b) parmi la pluralité d'éléments chauffants (22a, 22b) présente une durée de fonctionnement attendue plus courte que la durée de fonctionnement maximale déterminée, la commande d'un rendement d'élément chauffant (22a, 22b) qui soit inférieur au rendement déterminé respective d'élément chauffant (22a, 22b).

15. Procédé de commande selon la revendication 13, dans lequel
la détermination d'une quelconque durée de fonctionnement parmi les durées de fonctionnement attendues comprend la détermination d'une durée de fonctionnement attendue minimale parmi les durées de fonctionnement attendues déterminées, comme durée de fonctionnement de la pluralité d'éléments chauffants (22a, 22b), et
la commande du rendement de la pluralité d'éléments chauffants (22a, 22b) comprend, lorsqu'un élément chauffant (22a, 22b) parmi la pluralité d'éléments chauffants (22a, 22b) présente une durée de fonctionnement attendue plus longue que la durée de fonctionnement minimale déterminée, la commande d'un rendement de l'élément chauffant (22a, 22b) qui soit supérieur au rendement déterminé respective de l'élément chauffant (22a, 22b).
